# EUROPÄISCHE PATENTSCHRIFT

(11) **EP 3 565 678 B1**
(45) Veröffentlichungstag und Bekanntmachung des Hinweises auf die Patenterteilung: **16.07.2025**
(21) Anmeldenummer: 17821877.2
(22) Anmeldetag: 19.12.2017
(51) Int. Cl.: B22C 1/18, B22C 3/00, B22C 9/02, B22C 1/02, B22C 9/12, B22C 19/00

(54) **VERWENDUNG EINER SCHLICHTEZUSAMMENSETZUNG, UMFASSEND ORGANISCHE ESTERVERBINDUNGEN UND PARTIKULÄRES, AMORPHES SILIZIUMDIOXID, IN DER GIESSEREIINDUSTRIE**
USE OF SIZE COMPOSITION, COMPRISING ORGANIC ESTER COMPOUNDS AND PARTICULATE, AMORPHOUS SILICON DIOXIDE, IN THE FOUNDRY INDUSTRY
UTILISATION DE COMPOSITION DE POTEYAGE, COMPORTANT DES COMPOSÉS ESTERS ORGANIQUES ET DU DIOXYDE DE SILICIUM AMORPHE, PARTICULAIRE, DANS L'INDUSTRIE DE FONDERIE

(30) Priorität: 04.01.2017 DE 102017100111; 10.04.2017 DE 102017107657
(43) Veröffentlichungstag der Anmeldung: 13.11.2019
(73) Patentinhaber: HÜTTENES-ALBERTUS Chemische Werke Gesellschaft mit beschränkter Haftung, 40549 Düsseldorf (DE)
(72) Erfinder: JATTKE, Andreas, 30457 Hannover (DE); LUSTIG, Christian, 40211 Düsseldorf (DE); ANDERTEN, Sabrina Maria, 30916 Isernhagen (DE); SEEGER, Klaus, 30171 Hannover (DE)
(74) Vertreter: Eisenführ Speiser
(86) Internationale Anmeldenummer: PCT/EP2017/083472
(87) Internationale Veröffentlichungsnummer: WO 2018/127399

(56) Entgegenhaltungen:
- CN-A- 105 170 890
- DE-A1- 102011 115 024

## Beschreibung

Die vorliegende Erfindung betrifft die Verwendung einer Schlichtezusammensetzung für die Gießereiindustrie zur Herstellung eines Überzuges auf einem Gießereiformkörper, insbesondere umfassend gewisse organische Esterverbindungen und partikuläres, amorphes Siliziumdioxid (SiO₂); sowie geschlichtete Gießereiformkörper, insbesondere Gießereiformen und/oder Gießereikerne, welche jeweils eine vorgenannte Schlichtezusammensetzung umfassen. Weiter betrifft die Erfindung ein Verfahren zur Herstellung eines mit einer wasserhaltigen Schlichte geschlichteten Gießereiformkörpers. Ebenfalls betrifft die Erfindung ein Kit, u.a. enthaltend eine vorgenannte Schlichtezusammensetzung. Die Erfindung wird in den beigefügten Ansprüchen definiert.

Das Gießen in einer verlorenen Form ist ein verbreitetes Verfahren zur Herstellung endkonturnaher Bauteile, insbesondere beim Metallguss. Nach dem Guss wird die Form zerstört und das Gussstück wird entnommen. Formen sind Negative, sie enthalten den auszugießenden Hohlraum, der das zu fertigende Gussstück ergibt. Die Innenkonturen des zukünftigen Gussstückes können durch Kerne gebildet werden. Bei der Herstellung der Form kann mittels eines Modells des zu fertigenden Gussstücks der Hohlraum in den Formstoff geformt werden. Kerne werden meist in einem separaten Kernkasten geformt.

Für Gießereiformen (für die Zwecke der vorliegenden Erfindung auch als "Formen" bezeichnet) und Gießereikerne (für die Zwecke der vorliegenden Erfindung auch als "Kerne" bezeichnet) Für Gießereiformen (für die Zwecke der vorliegenden Erfindung auch als "Formen" bezeichnet) und Gießereikerne (für die Zwecke der vorliegenden Erfindung auch als "Kerne" bezeichnet) werden als Formgrundstoffe überwiegend feuerfeste körnige Stoffe wie z.B. gewaschener, klassifizierter Quarzsand verwendet. Weitere geeignete und an sich bekannte Formgrundstoffe sind z.B. Zirkonsande, Chromitsande, Schamotten, Olivinsande, feldspathaltige Sande und Andalusitsande. Ein Formgrundstoff kann auch eine Mischung verschiedener der genannten oder anderer bevorzugter Formgrundstoffe sein. Der feuerfeste Formgrundstoff liegt bevorzugt in rieselfähiger Form vor, so dass er in eine geeignete Hohlform eingefüllt und darin verdichtet werden kann. Der Formgrundstoff bzw. die entsprechende Formstoffmischung (Formstoff) wird verdichtet, um die Festigkeit der Gießereiform zu erhöhen. Zur Herstellung der Gießereiformen werden die Formgrundstoffe mit anorganischen oder organischen Formstoffbindemitteln (Bindern) gebunden. Durch das Formstoffbindemittel wird ein fester Zusammenhalt zwischen den Partikeln des Formstoffs erzeugt, so dass die Gießereiform die erforderliche mechanische Stabilität erhält. Die Herstellung von Formen und Kernen erfolgt in der industriellen Praxis regelmäßig und vorteilhafterweise in Schießmaschinen oder Formmaschinen, in denen eine Verdichtung der partikulären Bestandteile und eine Härtung des Binders erfolgt; dies gilt auch für die im Rahmen der vorliegenden Erfindung eingesetzten Formen und Kerne. Formen bzw. Kerne zur Verwendung in der Gießerei umfassen somit (auch für die Zwecke der vorliegenden Erfindung) einen Formgrundstoff, der vorzugsweise verdichtet ist.

Zur Herstellung von Gießereiformen können sowohl organische als auch anorganische Formstoffbindemittel eingesetzt werden, deren Aushärtung jeweils durch kalte oder heiße Verfahren erfolgen kann. Als kalte Verfahren bezeichnet der Fachmann dabei Verfahren, welche im Wesentlichen bei Raumtemperatur ohne Erhitzen der Gießereiform durchgeführt werden. Die Aushärtung erfolgt dabei meist durch eine chemische Reaktion, die beispielsweise dadurch ausgelöst wird, dass ein Gas als Katalysator nach der Formgebung durch die zu härtende Formstoffmischung geleitet wird, die den Formgrundstoff und das Formstoffbindemittel enthält. Bei heißen Verfahren wird die Formstoffmischung nach der Formgebung auf eine ausreichend hohe Temperatur erhitzt, um beispielsweise das im Formstoffbindemittel enthaltene Lösungsmittel auszutreiben und/oder um eine chemische Reaktion zu initiieren, durch welche das Formstoffbindemittel ausgehärtet wird, beispielsweise durch Vernetzen.

Unabhängig vom Aushärtemechanismus ist allen organischen Formstoffbindemitteln gemeinsam, dass sie sich beim Einfüllen von flüssigem Metall in die Gießereiform thermisch zersetzen und dabei Schadstoffe, wie z. B. Benzol, Toluol, Xylole, Phenol, Formaldehyd und andere, teilweise nicht identifizierte, Thermolyse- bzw. Crackprodukte freisetzen können. Es ist zwar durch verschiedene Maßnahmen gelungen, diese Emissionen zu minimieren, völlig vermeiden lassen sie sich bei organischen Formstoffbindemitteln derzeit jedoch nicht.

Um die Emission von Zersetzungsprodukten während des Gießvorgangs zu minimieren bzw. zu vermeiden, können Formstoffbindemittel verwendet werden, die auf anorganischen Materialien basieren und allenfalls einen sehr geringen Anteil an organischen Verbindungen enthalten. Solche Formstoffbindemittelsysteme sind bereits seit längerem bekannt, beispielsweise aus den Dokumenten GB 782205 A, US 6972059 B1, US 5582232 A, US 5474606 A und US 7022178.

Nachfolgend bezeichnet der Begriff "anorganisches Formstoffbindemittel" ein Formstoffbindemittel, welches ganz überwiegend, bevorzugt zu mehr als 95 Gew.-%, vorzugsweise zu mehr als 99 Gew.-%, ganz besonders bevorzugt vollständig aus Wasser und anorganischen Materialien besteht, so dass der Anteil an organischen Verbindungen in einem solchen anorganischen Formstoffbindemittel bevorzugt kleiner als 5 Gew.-%, vorzugsweise kleiner als 1 Gew.-% und ganz besonders bevorzugt 0 Gew.-% ist.

Der Ausdruck "anorganisch gebunden" bedeutet im Rahmen des vorliegenden Textes, dass eine Form bzw. ein Kern mit einem anorganischen Formstoffbindemittel (wie vorstehend definiert) gebunden wurde. In einer anorganisch gebundenen (vorzugsweise wasserglasgebundenen) Form bzw. in einem anorganisch gebundenen (vorzugsweise wasserglasgebundenen) Kern sind Partikel eines körnigen Formgrundstoffs und gegebenenfalls weitere Feststoffbestandteile durch ein anorganisches Formstoffbindemittel (wie vorstehend definiert) gebunden.

Von besonderer Bedeutung als Bestandteil anorganischer Formstoffbindemittel ist Alkaliwasserglas. Als Alkaliwasserglas werden aus einer Schmelze erstarrte, glasartige, also amorphe, wasserlösliche Natrium-, Kalium- und Lithiumsilicate, ihre Mischungen sowie die entsprechenden wässrigen Lösungen bezeichnet. Nachfolgend bezeichnet der Begriff "Wasserglas" solche amorphen, wasserlöslichen Natrium-, Kalium- und/oder Lithiumsilicate und/oder deren wässrige Lösungen und/oder Mischungen der vorgenannten Silicate und/oder deren Lösungen, die jeweils ein molares Modul (molares Verhältnis) von SiO₂ zu M₂O im Bereich von 1,6 bis 4,0, vorzugsweise im Bereich von 1,8 bis 2,5 aufweisen, wobei M₂O die Gesamtmenge an Lithium-, Natrium- und Kaliumoxid bezeichnet. Der Ausdruck "wasserglasgebunden" bedeutet, dass ein Gießereiformkörper, insbesondere eine Form oder ein Kern, unter Verwendung eines Formstoffbindemittels hergestellt wurde bzw. herstellbar ist, welches Wasserglas umfasst oder aus Wasserglas besteht. Beispielsweise wird in der Schrift US 7770629 B2 eine Formstoffmischung vorgeschlagen, welche neben einem feuerfesten Formgrundstoff ein auf Wasserglas basierendes Formstoffbindemittel und ein teilchenförmiges Metalloxid umfasst, wobei als teilchenförmiges Metalloxid bevorzugt Fällungskieselsäure oder pyrogene Kieselsäure verwendet wird.

Anorganische Formstoffbindemittel weisen im Vergleich zu organischen Formstoffbindemitteln jedoch auch Nachteile auf. Beispielsweise besitzen mit bekannten anorganischen Formstoffbindemitteln hergestellte Gießereiformen oder -kerne eine vergleichsweise geringe oder geringere Stabilität gegenüber Luftfeuchtigkeit bzw. gegenüber Wasser oder wässriger Feuchtigkeit. Damit ist z.B. eine Lagerung solcher Gießereiformen oder -kerne über einen längeren Zeitraum, wie mit organischen Formstoffbindemitteln üblich, nicht zuverlässig möglich.

Üblicherweise werden, insbesondere beim Stahl- und Eisenguss, die Oberflächen von Gießereiformkörpern, insbesondere von Formen und Kernen, mit einem "Schlichte" genannten Überzug beschichtet, insbesondere diejenigen Oberflächen, die mit gegossenem Metall in Berührung kommen. Schlichten bilden hier eine Grenz- oder Sperrschicht zwischen Form/Kern und Metall, u.a. zur gezielten Unterdrückung von Fehlermechanismen an diesen Stellen oder zur Nutzung metallurgischer Effekte. Allgemein sollen Schlichten in der Gießereitechnik vor allem folgende, dem Fachmann bekannte, Funktionen erfüllen:
- Verbesserung der Glätte der Gussstückoberfläche;
- Möglichst vollständige Trennung von flüssigem Metall und Form bzw. Kern;
- Vermeidung von chemischen Reaktionen zwischen Bestandteilen von Form/Kern und Schmelze, dadurch Erleichterung der Trennung zwischen Form/Kern und Gussstück und/oder
- Vermeidung von Oberflächenfehlern am Gussstück wie z.B. Gasblasen, Penetrationen, Blattrippen und/oder Schülpen.

Die vorstehend genannten sowie gegebenenfalls weitere Funktionen werden in der Regel durch die genaue Zusammensetzung der Schlichte bzw. der auf die Form bzw. den Kern zu applizierenden Schlichtezusammensetzung eingestellt und optimiert bzw. an den jeweils beabsichtigten Zweck angepasst.

Schlichtezusammensetzungen zur Verwendung in der Gießerei enthalten meist folgende Komponenten, oder setzen sich aus diesen zusammen: (i) ein oder mehrere feinkörnige Feuerfeststoffe, d.h. feinkörnige, feuerfeste bis hochfeuerfeste anorganische Materialien (ii) eine Trägerflüssigkeit, umfassend eine oder mehrere Verbindungen (Wasser, Alkohole, etc.) sowie (iii) als weitere Bestandteile z.B. ein oder mehrere Schlichtebindemittel (nachfolgend auch kurz als "Bindemittel" bezeichnet) und/oder Biozide und/oder Netzmittel und/oder rheologische Additive. Gebrauchsfertige Schlichtezusammensetzungen zur Beschichtung von Formen und Kernen sind demnach meist Suspensionen von feinkörnigen, feuerfesten bis hochfeuerfesten anorganischen Materialien (Feuerfeststoffen) in einer Trägerflüssigkeit, z.B. einer wässrigen (d.h. Wasser enthaltenden) Trägerflüssigkeit oder einer nichtwässrigen (d.h. kein Wasser enthaltenden) Trägerflüssigkeit; zu Details hinsichtlich der Trägerflüssigkeit siehe weiter unten.

Die Schlichte bzw. die Schlichtezusammensetzung wird durch ein geeignetes Auftragsverfahren, beispielsweise Sprühen, Tauchen, Fluten oder Streichen auf die Innenkontur der Gießform oder auf den Kern aufgebracht und dort getrocknet, so dass ein Schlichteüberzug oder Schlichtefilm entsteht. Die Trocknung des Schlichteüberzugs kann durch Zufuhr von Wärme oder Strahlungsenergie, z.B. durch Mikrowellenstrahlung, oder durch Trocknung an der Raumluft erfolgen. Im Falle von Schlichtezusammensetzungen, welche brennbare Verbindungen in der Trägerflüssigkeit enthalten, kann die Trocknung auch durch Abbrennen dieser Verbindungen erfolgen.

Als "feuerfest" werden im vorliegenden Text im Einklang mit dem üblichen fachmännischen Verständnis Massen, Werkstoffe und Mineralien bezeichnet, die zumindest kurzzeitig der Temperaturbelastung beim Abguss bzw. bei der Erstarrung einer Eisenschmelze, meist Gusseisen, widerstehen können. Als "hochfeuerfest" werden Massen, Werkstoffe und Mineralien bezeichnet, die kurzfristig der Gießhitze einer Stahlschmelze widerstehen können. Die Temperaturen, die beim Abguss von Stahlschmelzen auftreten können, liegen meist höher, als die Temperaturen, welche beim Abguss von Eisen- bzw. Gusseisenschmelzen auftreten können. Feuerfeste Massen, Werkstoffe und Mineralien (Feuerfeststoffe) und hochfeuerfeste Massen, Werkstoffe und Mineralien sind dem Fachmann bekannt, beispielsweise aus der DIN 51060:2000-06.

Als Feuerfeststoffe werden in Schlichtezusammensetzungen üblicherweise mineralische Oxide, Silikate oder Tonmineralien eingesetzt. Beispiele für auch im Rahmen der vorliegenden Erfindung geeignete Feuerfeststoffe sind Quarz (Siliciumdioxid), Aluminiumoxid, Zirkondioxid, Aluminiumsilicate, Schichtsilikate, Zirkonsilikate, Olivin, Talk, Glimmer, Graphit, Koks, Feldspat, Diatomit, Kaoline, kalzinierte Kaoline, Metakaolinit, Eisenoxid, Chromit und Bauxit, die jeweils einzeln oder in beliebigen Kombinationen miteinander eingesetzt werden können. Der Feuerfeststoff dient u.a. dazu, die Poren in einer Gießereiform oder einem Kern gegen das Eindringen des flüssigen Metalls zu verschließen. Weiter wird durch den Feuerfeststoff eine thermische Isolierung zwischen Gießereiform bzw. Kern und flüssigem Metall erreicht. Der Feuerfeststoff wird meist in Pulverform bereitgestellt. Sofern nicht anders angegeben, weisen pulverförmige Feuerfeststoffe dann eine mittlere Korngröße (vorzugsweise gemessen mittels Lichtstreuung nach ISO 13320:2009-10) im Bereich von 0,1 bis 500 µm, bevorzugt im Bereich von 1 bis 200 µm, auf. Als Feuerfeststoffe sind insbesondere solche Materialien geeignet, welche Schmelzpunkte aufweisen, die zumindest 200 °C oberhalb der Temperatur der jeweils eingesetzten Metallschmelze liegen und/oder die keine Reaktion mit der Metallschmelze eingehen.

Die Feuerfeststoffe werden meist in einer Trägerflüssigkeit dispergiert. Die Trägerflüssigkeit ist ein oder der Bestandteil einer Schlichtezusammensetzung, der vorzugsweise unter Normalbedingungen (20 °C und 1013,25 hPa) flüssig vorliegt und/oder bei 160 °C und Normaldruck (1013,25 hPa) verdampfbar ist. Bevorzugte Trägerflüssigkeiten, welche auch im Rahmen der vorliegenden Erfindung geeignet sind, sind ausgewählt aus der Gruppe bestehend aus Wasser und organischen Trägerflüssigkeiten sowie deren Mischungen untereinander und/oder mit weiteren Bestandteilen. Geeignete organische Trägerflüssigkeiten sind vorzugsweise Alkohole, einschließlich Polyalkohole und Polyetheralkohole. Bevorzugte Alkohole sind Ethanol, n-Propanol, Isopropanol (2-Propanol), n-Butanol und Glykol. Wasser und wässrige Mischungen (auch wässrige Lösungen) sind als Trägerflüssigkeit häufig bevorzugt.

Schlichtebindemittel (Bindemittel) dienen vor allem dazu, die in einer Schlichtezusammensetzung enthaltenen Feuerfeststoffe auf dem Formstoff zu fixieren. Beispiele für Bindemittel, welche auch im Rahmen der vorliegenden Erfindung geeignet sind, sind Kunstharze (organische Polymere) oder Kunstharzdispersionen wie Polyvinylalkohole, Polyacrylate, Polyvinylacetate und/oder entsprechende Copolymerisate der vorgenannten Polymere. Polyvinylalkohole sind bevorzugt. Auch Naturharze, Dextrine, Stärken und Peptide sind als Bindemittel geeignet.

Biozide verhindern einen bakteriellen Befall. Beispiele für auch im Rahmen der vorliegenden Erfindung geeignete Biozide sind Formaldehyd, 2-Methyl-4-isothiazolin-3-on (MIT), 5-Chlor-2-methyl-4-iosthiazolin-3-on (CIT) und 1,2-Benzisothiazolin-3-on (BIT). Die Biozide, vorzugsweise die genannten individuellen Biozide, werden üblicherweise in einer Gesamtmenge von 10 bis 1000 ppm, vorzugsweise in einer Menge von 50 bis 500 ppm verwendet, jeweils bezogen auf die Gesamtmasse der gebrauchsfertigen Schlichtezusammensetzung (die dazu vorgesehen ist, unmittelbar auf eine Gießform bzw. einen Kern appliziert zu werden).

Rheologische Additive (Stellmittel) werden eingesetzt, um die für die Verarbeitung gewünschte Fließfähigkeit der Schlichte einzustellen. Auch im Rahmen der vorliegenden Erfindung geeignete anorganische Stellmittel sind beispielsweise quellfähige Tone, wie z. B. Natriumbentonit oder Attapulgit (Palygorskit). Als auch im Rahmen der vorliegenden Erfindung geeignete organische Stellmittel sind beispielsweise quellfähige Polymere zu nennen, wie Cellulosederivate, insbesondere Carboxymethyl-, Methyl-, Ethyl-, Hydroxyethyl- und Hydroxypropylcellulose, Pflanzenschleime, Polyvinylpyrrolidon, Pektin, Gelatine, Agar Agar, Polypeptide und/oder Alginate. Die vorgenannten rheologischen Additive bzw. Stellmittel sind bevorzugte Inhaltsstoffe der erfindungsgemäßen Schlichtezusammensetzung.

Insbesondere im Falle von wässrigen (d.h. als Trägerflüssigkeit oder Bestandteil der Trägerflüssigkeit Wasser enthaltenden) Schlichtezusammensetzungen können zudem Netzmittel eingesetzt werden, um eine bessere Benetzung des Formstoffes zu erzielen. Dem Fachmann sind ionische und nichtionische Netzmittel bekannt. Beispielsweise werden als ionische Netzmittel Dioctylsulfosuccinate und als nichtionische Netzmittel Alkindiole bzw. ethoxylierte Alkindiole eingesetzt. Die vorgenannten Netzmittel sind auch bevorzugte Inhaltsstoffe der erfindungsgemä-ßen wässrigen Schlichtezusammensetzung.

Eine Schlichtezusammensetzung kann darüber hinaus Entschäumer, Pigmente und/oder Farbstoffe enthalten. Als Entschäumer können beispielsweise Silikon- oder Mineralöl verwendet werden. Beispiele für Pigmente sind rotes und gelbes Eisenoxid sowie Graphit. Beispiele für Farbstoffe sind handelsübliche, dem Fachmann bekannte Farbstoffe. Die vorgenannten Entschäumer, Pigmente und/oder Farbstoffe sind auch bevorzugte Inhaltsstoffe der erfindungsgemäßen Schlichtezusammensetzung.

Um den steigenden Anforderungen im Bereich Umwelt- und Emissionsschutz gerecht werden zu können, sollten zukünftig auch im Bereich des Stahl- und Eisengusses anorganische Formstoffbindemittel, insbesondere wasserglashaltige Formstoffbindemittel, bei der Fertigung von Formen und Kernen an Bedeutung gewinnen. Um die erwünschte bzw. notwendige Abgussgüte zu erzielen, ist es, wie oben angeführt, meist notwendig oder vorteilhaft, anorganisch gebundene Formen und Kerne mit einer Schlichte zu überziehen. Im Sinne des Umwelt- und Emissionsschutzes ist es daher konsequenterweise auch bei der Auswahl der Schlichte erstrebenswert, auf die Verwendung von organischen Trägerflüssigkeiten so weit wie möglich zu verzichten und vorzugsweise wasserbasierte Schlichten, d.h. Schlichten mit Wasser als alleiniger Trägerflüssigkeit oder als zumindest überwiegendem Anteil an der Trägerflüssigkeit, einzusetzen.

Wie vorstehend angegeben, besitzen aber Gießereiformkörper, insbesondere Formen und Kerne, die mit anorganischen Formstoffbindemitteln, insbesondere mit wasserglashaltigen Formstoffbindemitteln, hergestellt wurden, eine geringe Stabilität gegenüber der Einwirkung von Wasser oder wässriger Feuchte. Das in wasserbasierten Schlichtezusammensetzungen enthaltene Wasser kann folglich die damit behandelten (geschlichteten), anorganisch gebundenen Formen und Kerne beschädigen. Dadurch kann insbesondere die Festigkeit der so geschlichteten Formen und Kerne nachteilig vermindert werden. Diesem in der Gießereitechnik bekannten besonderen Problem (vgl. z.B. WO 00/05010A1) kann mit bisher eingesetzten Mitteln, darunter z.B. eine besonders intensive Härtung der Formen und Kerne, aufwändige Verfahren zur Trocknung der applizierten Schlichte oder die Anpassung der Formstoffmischung, bislang nur unzureichend begegnet werden.

Im Dokument WO 00/05010 wird angegeben, dass eine Beschichtung auf der Basis von Wasser insbesondere angewendet werden kann auf mit Kohlenstoffdioxid begasten und mit Natriumsilikat gebundenen Kernen und Formen, wenn die zum Einsatz kommende Zusammensetzung der Beschichtung einen in Wasser löslichen oder einen mit Wasser mischbaren spezifischen Zusatzstoff wie Ester von mehrwertigen Alkoholen, Carbonate, Ester oder Lactone enthält.

Im Dokument WO 2013/044904 A1 wird angegeben, dass durch die Kombination bestimmter Tone als Inhaltsstoffe einer wasserhaltigen Schlichte Schlichten mit einem ungewöhnlich hohen Feststoffgehalt hergestellt werden können, deren Viskosität aber trotzdem mit handelsüblichen, gebrauchsfertigen Schlichten vergleichbar sei, wobei die Qualität der mit diesen Schlichten beschichteten, mit anorganischen Formstoffbindemitteln gebundenen Kerne und Formen verbessert werden könne.

In den Dokumenten DE 10 2011 115 025A1 und WO 2013/050022 A2 wird angegeben, dass bei Zugabe bestimmter Salze in einem bestimmten Konzentrationsbereich zu einer wässrigen Schlichtezusammensetzung die Qualität der geschlichteten anorganischen Kerne und Formen verbessert werden, insbesondere deren Lagerstabilität gesteigert werden könne. Bei den Salzen handelt es sich um Salze von Magnesium und/oder Mangan, insbesondere deren Sulfate und Chloride.

Die Dokumente DE 10 2011 115 024 A1 und WO 2013/050023 A2 geben an, dass bei Zugabe bestimmter Additive zu einer wässrigen Schlichtezusammensetzung die Qualität der geschlichteten anorganischen Kerne und Formen verbessert, insbesondere deren Lagerstabilität gesteigert werden könne. Als Additiv-Bestandteil der Schlichtezusammensetzung werden Ester der Ameisensäure (Methansäure) verwendet, wobei die Kettenlänge des bei der Veresterung verwendeten Alkohols bzw. der Alkoholmischung insbesondere im Mittel kleiner sechs und besonders bevorzugt kleiner drei Kohlenstoffatome beträgt.

Das Dokument DE 10 2006 040 385 A1 offenbart temperaturstabile BN-Formtrennschichten auf Basis von keramischen und glasartigen Bindern; das Dokument offenbart jedoch nicht die Verwendung für anorganisch gebundene Formen oder Kerne (auf Basis entsprechender körniger Formgrundstoffe) zur Verwendung in der Gießerei.

Das Dokument CN 105170890 A betrifft ausweislich seiner Zusammenfassung das Gebiet des Gießens, insbesondere eine Gussbeschichtung, die den Gussfinishgrad verbessern kann. Die Gussbeschichtung ist dadurch gekennzeichnet, dass sie 15 bis 20 Gewichtsteile Kieselgur, 2 bis 5 Teile Titandioxid, 2 bis 3 Teile Aluminiumsulfat, 5 bis 7 Teile Kieselsol (Ludox), 1 bis 2 Teile Vernetzungsmittel auf Wasserbasis, 0,5 bis 1 Teile eines Verdickungsmittels auf Wasserbasis, 1-2 Teile organische Klebstoffe, 70-80 Teile Ethylalkohol, 1-2 Teile eines Bentonit-Suspendiermittels, 10-15 Teile n-Octanol, 1-3 Teile Maleinsäureanhydrid und 20-25 Teile modifizierte Strohasche umfasst.

Das Deutsche Patent- und Markenamt hat zu der Prioritätsanmeldung zu vorliegender Anmeldung folgenden Stand der Technik recherchiert: DE 10 2006 040 385 A1, WO 00/ 05 010 A1 und DE 10 2011 115 024 A1.

Die vorstehend genannten Probleme bestehen aber, wie eigene Untersuchungen gezeigt haben, selbst bei einer Vorgehensweise nach dem genannten Stand der Technik noch in relevantem Maße.

Ausgehend vom Stand der Technik besteht daher ein Bedarf an weiter verbesserten Schlichtezusammensetzungen zur Verwendung in der Gießerei, welche eine oder mehrere, vorzugsweise alle, der folgenden vorteilhaften Eigenschaften aufweisen oder ermöglichen sollen:
- die Festigkeit der damit herstellbaren geschlichteten Formen und/oder Kerne soll gegenüber mit bekannten wasserhaltigen Schlichten bzw. Schlichtezusammensetzungen geschlichteten Formen und Kernen erhöht werden, insbesondere soweit die Formen und Kerne mit anorganischen Formstoffbindemitteln, insbesondere mit wasserglashaltigen Formstoffbindemitteln, hergestellt wurden;
- die Lagerstabilität sowie die Beständigkeit gegenüber Luftfeuchtigkeit der damit herstellbaren geschlichteten Formen und/oder Kerne soll gegenüber mit bekannten wasserhaltigen Schlichten bzw. Schlichtezusammensetzungen geschlichteten Formen und/oder Kernen erhöht werden;
- die Lagerstabilität der Schlichtezusammensetzung selbst soll gegenüber bekannten wasserhaltigen Schlichtezusammensetzungen nicht signifikant verschlechtert sein oder sogar gesteigert werden;
- die Applikation der Schlichtezusammensetzung auf heiße Formen und/oder Kerne (d.h. insbesondere auf solche Formen und/oder Kerne, welche Temperaturen von mehr als 50 °C, vorzugsweise Temperaturen im Bereich von 50 bis 100 °C, aufweisen) soll ermöglicht oder zumindest verbessert werden;
- die damit herstellbaren geschlichteten Formen und Kerne sollen eine hohe, vorzugsweise eine fehlerarme Abgussgüte, besonders bevorzugt eine fehlerfreie Abgussgüte und/oder Glätte der Gussstückoberfläche ermöglichen;
- der Einsatz von anorganisch gebundenen, insbesondere wasserglasgebundenen Gießereiformkörpern, insbesondere Formen und/oder Kernen, soll auch für den Eisen- und/oder Stahlguss ermöglicht bzw. die Möglichkeit des Einsatzes für diese Zwecke soll erweitert werden.

Es war allgemein eine Aufgabe der vorliegenden Erfindung, eine Schlichtezusammensetzung zur Verwendung in der Gießerei anzugeben, die eine oder mehrere oder sämtliche der vorstehend genannten Eigenschaften besitzt bzw. ermöglicht.

Es war dabei eine primäre Aufgabe der vorliegenden Erfindung, eine Schlichtezusammensetzung zur Verwendung in der Gießerei zu entwickeln, die auf Gießereiformkörpern, insbesondere anorganisch gebundenen, insbesondere wasserglasgebundenen, Gießereiformkörpern, vorzugsweise Formen und/oder Kernen eingesetzt werden kann, ohne deren Eigenschaften, insbesondere deren Festigkeiten, nachteilig zu beeinflussen.

Eine weitere Aufgabe der vorliegenden Aufgabe war es, geschlichtete anorganisch gebundene Gießereiformkörper, insbesondere Gießereiformen und/oder Gießereikerne, zur Verfügung zu stellen, welche jeweils eine erfindungsgemäß anzugebende Schlichtezusammensetzung umfassen.

Eine weitere Aufgabe der vorliegenden Erfindung bestand darin, ein entsprechendes Verfahren zur Herstellung eines mit einer wasserhaltigen Schlichte geschlichteten anorganisch gebundenen Gießereiformkörpers zur Verfügung zu stellen.

Zudem war eine Aufgabe der vorliegenden Erfindung ein Kit, u.a. enthaltend eine erfindungsgemäß anzugebende Schlichtezusammensetzung, zur Verfügung zu stellen.

Die Erfindung wird in den beigefügten Ansprüchen näher definiert bzw. beschrieben, einschließlich besonders bevorzugter Kombinationen bevorzugter Parameter, Eigenschaften und Bestandteile der Erfindung. Spezielle und/oder bevorzugte Ausführungsformen der Erfindung werden nachfolgend genauer beschrieben. Sofern nicht anders angegeben, lassen sich bevorzugte Aspekte oder Ausführungsformen der Erfindung mit anderen Aspekten oder Ausführungsformen der Erfindung, insbesondere mit anderen bevorzugten Aspekten oder Ausführungsformen, kombinieren. Die Kombination von jeweils bevorzugten Aspekten oder Ausführungsformen miteinander ergibt jeweils wieder bevorzugte Aspekte oder Ausführungsformen der Erfindung. Ausführungsformen, Aspekte oder Eigenschaften, welche im Zusammenhang mit der vorliegenden Erfindung für die erfindungsgemäße Schlichtezusammensetzung beschrieben oder als bevorzugt beschrieben werden, gelten jeweils entsprechend bzw. sinngemäß auch für deren erfindungsgemäße Verwendungen, für erfindungsgemäße Verfahren, für erfindungsgemäße geschlichtete Formen oder Kerne sowie für erfindungsgemäße Kits.

Sofern im Folgenden erfindungsgemäße Verwendungen, erfindungsgemäße Verfahren, erfindungsgemäße geschlichtete Formen oder Kerne sowie erfindungsgemäße Kits beschrieben werden, welche näher bestimmte Ausführungsformen, Bestandteile oder Merkmale "umfassen" oder "enthalten", soll jeweils auch die in einem engeren Umfang zu verstehende entsprechende Variante der besagten Verwendungen, Verfahren, geschlichteten Formen oder Kerne bzw. Kits mit offenbart sein, welche aus diesen jeweils näher bestimmten Ausführungsformen, Bestandteilen oder Merkmalen "besteht".

Erfindungsgemäß werden die primäre Aufgabe und weitere oben angegebene Aspekte der allgemeinen Aufgabe gelöst durch die Verwendung einer Schlichtezusammensetzung umfassend
(a) Wasser,
(c) partikuläres, amorphes Siliziumdioxid und
(d) einen oder mehrere weitere Feuerfeststoffe,
   zur Herstellung eines Überzugs auf einer Form bzw. einem Kern, wobei die Form wasserglasgebunden ist und/oder wobei der Kern wasserglasgebunden ist,
   zur Verwendung in der Gießerei, dadurch gekennzeichnet, dass die Schlichtezusammensetzung weiter umfasst
(b) eine oder mehrere organische Verbindungen, ausgewählt aus der Gruppe bestehend aus Propylencarbonat, γ-Butyrolacton, Diacetin, Triacetin, dibasischem Ester, Essigsäureanhydrid, Methylcarbonat und ε-Caprolacton,
wobei dibasischer Ester eine Mischung aus mehreren Dimethylestern von Glutarsäure, Bernsteinsäure und Adipinsäure ist.

Besonders bevorzugt ist Propylencarbonat (CAS RN 108-32-7) als organische Verbindung in Bestandteil (b); Im Hinblick auf die oben angegebene Verbindung der Formel (I) ist in Propylencarbonat R1 über ein O-Atom (an die Carboxylgruppe) angeknüpft und ist mit R2 unter Ausbildung einer Ringstruktur verknüpft, die insgesamt 5 Ringatome umfasst; die verknüpften Gruppen R1 und R2 enthalten dabei insgesamt 3 C-Atome.

Unter dem Begriff "dibasischer Ester" wird eine Mischung aus mehreren Dimethylestern von Dicarbonsäuren, insbesondere Glutarsäure, Bernsteinsäure und Adipinsäure, verstanden. Die Mischung enthält einen Anteil in einem Bereich von 55 bis 67 Gew.-% an Dimethylglutarat, 15 bis 25 Gew.-% an Dimethylsuccinat und 10 bis 25 Gew.-% an Dimethyladipat.

Unter dem Begriff "partikuläres, amorphes Siliziumdioxid" wird im Rahmen der vorliegenden Erfindung teilchenförmiges synthetisches Siliziumdioxid verstanden, vorzugsweise Fällungskieselsäure und/oder pyrogene Kieselsäuren. Pyrogene Kieselsäuren sind bevorzugt.

Das partikuläre, amorphe Siliziumdioxid (Bestandteil (c)) zählt jedenfalls für die Zwecke der vorliegenden Erfindung nicht zu den weiteren Feuerfeststoffen des Bestandteiles (d).

Fällungskieselsäure ist an sich bekannt und kann z.B. auf an sich bekannte Weise durch Reaktion einer wässrigen Alkalisilikatlösung mit Mineralsäuren erhalten werden: der dabei anfallende Niederschlag wird anschließend abgetrennt, getrocknet und gegebenenfalls vermahlen. Pyrogene Kieselsäuren sind ebenfalls an sich bekannt und können vorzugsweise auf an sich bekannte Weise bei hohen Temperaturen durch Koagulation aus der Gasphase gewonnen werden. Die Herstellung pyrogener Kieselsäure kann z.B. durch Flammhydrolyse von Siliziumtetrachlorid, oder für die Zwecke der vorliegenden Erfindung vorzugsweise im Lichtbogenofen durch Reduktion von Quarzsand mit Koks oder Anthrazit zu Siliziummonoxidgas mit anschließender Oxidation zu Siliziumdioxid erfolgen. Eine weitere erfindungsgemäß bevorzugte Form von amorphem, partikulärem Siliziumdioxid fällt bei der Zirkondioxidherstellung an. Eine weitere, an sich bekannte, Möglichkeit der Herstellung von partikulärem amorphem Siliziumdioxid ist das Versprühen einer Siliziumdioxidschmelze: die primären, amorphen Siliziumdioxid-Teilchen entstehen hierbei (wie auch in anderen bevorzugten Herstellverfahren) nicht durch einen Vermahlungsprozess.

Die primären amorphen Siliziumdioxid-Teilchen ("Primärpartikel") liegen nach den oben genannten Herstellungsprozessen häufig agglomeriert, d.h. als Agglomerate von Primärpartikeln vor. Vorzugsweise sind für die Zwecke der vorliegenden Erfindung die Primärpartikel des partikulären, amorphen Siliziumdioxids (i) sphärisch und besitzen (ii) einen D90-Wert < 10 µm vorzugsweise < 1 µm, bestimmt mittels Laserbeugung. Die Teilchenform der Primärpartikel des partikulären, amorphen Siliziumdioxids ist vorzugsweise sphärisch. Die sphärische Gestalt der Primärpartikel kann z.B. mittels Rasterelektronenmikroskopie festgestellt werden. Vorzugsweise sind die Primärpartikel des partikulären, amorphen Siliziumdioxids sphärisch und besitzen eine Sphärizität von 0,9 oder mehr, bestimmt durch Auswertung zweidimensionaler mikroskopischer (vorzugsweise rasterelektronenmikroskopischer) Bilder.

Als Feuerfeststoffe (vgl. Bestandteil (d)) werden vorzugsweise eine oder mehrere Substanzen ausgewählt aus der Gruppe bestehend aus Quarz, Aluminiumoxid, Zirkondioxid, Aluminiumsilikaten, Schichtsilikaten, Zirkonsilikaten, Olivin, Talk, Glimmer, Graphit, Koks, Feldspat, Diatomit, Kaoline, kalzinierten Kaolinen, Metakaolinit, Eisenoxid und Bauxit..

Die zur erfindungsgemäßen Verwendung eingesetzte Schlichtezusammensetzung ist besonders geeignet zur Herstellung eines Überzugs auf einem anorganisch gebundenen, erfindungsgemäß einem wasserglasgebundenen Gießereiformkörper. Besonders bevorzugt kann die Schlichtezusammensetzung zur Herstellung eines Überzugs auf einem wasserglasgebundenen Gießereiformkörper, nämlich einer Form und/oder einem Kern, eingesetzt werden, welcher mindestens einen Anteil an partikulärem amorphem Siliziumdioxid enthält.

Wasserglasgebundene Formen und Kerne, einschließlich solcher, welche partikuläres amorphes Siliziumdioxid (neben herkömmlichen körnigen Formgrundstoffen) enthalten, und deren Herstellung, sind an sich bekannt, beispielsweise aus den Dokumenten WO 2006/024540 und WO 2009/056320. Die vorgenannten, an sich bekannten Formen und Kerne sind für die Zwecke der vorliegenden Erfindung geeignet.

Bevorzugt ist eine zur erfindungsgemäßen Verwendung eingesetzte Schlichtezusammensetzung, wobei die Primärpartikel des partikulären, amorphen Siliziumdioxids (i) sphärisch sind und/oder (ii) einen D90-Wert < 10 µm, vorzugsweise < 1 µm, besitzen, bestimmt mittels Laserbeugung. Vorzugsweise sind die Primärpartikel des partikulären, amorphen Siliziumdioxids (i) sphärisch und besitzen eine Sphärizität von 0,9 oder mehr, bestimmt durch Auswertung zweidimensionaler mikroskopischer Bilder. Moderne handelsübliche elektronenmikroskopische oder lichtmikroskopische Systeme ermöglichen eine digitale Bildanalyse und somit eine komfortable Bestimmung der Partikelform. Die digitale Bildanalyse ist für Untersuchungen zur Sphärizität bevorzugt.

Die zur erfindungsgemäßen Verwendung eingesetzte Schlichtezusammensetzung ist auch, nicht erfindungsgemäß, geeignet zur Herstellung eines Überzugs auf einem mit wasserlöslich-alkalischen Bindemitteln gebundenen Gießereiformkörper. Wasserlöslich -alkalische Bindemittel sind dabei ausgewählt aus an sich bekannten esterhärtenden Phenolharzen, z.B. den unter der Bezeichnung "Alphaset^{®}" bekannten No-Bake-Bindersystemen wie z.B. offenbart im Dokument EP 85512, oder den unter dem Namen "Betaset^{®}" bekannten Alkylformiat-härtenden Phenol-Formaldehyd-Harzen wie z.B. offenbart im Dokument EP 86615, sowie aus den unter der Bezeichnung Carbophen^{®} bekannten Kohlendioxid-härtenden Phenolharzen wie z.B. offenbart im Dokument EP 2052798.

Die Gießereiformkörper, welche mit der zur erfindungsgemäßen Verwendung eingesetzten Schlichtezusammensetzung überzogen (geschlichtet) werden können, können auf beliebige, an sich bekannte Weise hergestellt werden, beispielsweise durch Schießen, Schütten oder durch 3D-Drucktechniken.

Ohne Gewähr der Richtigkeit wird vermutet, dass bei entsprechendem Einsatz der zur erfindungsgemäßen Verwendung eingesetzten wässrigen Schlichtezusammensetzung zwar wegen des Wasseranteils der Schlichtezusammensetzung Bindungsstrukturen im Alkalisilikatgerüst eines wasserglasgebundenen, geschlichteten Gießereiformkörpers (Form oder Kern) angegriffen werden, temporär möglicherweise daraus resultierende Schwächungen der Bindungsstruktur allerdings durch eine weitere chemische Reaktion, etwa eine Säure-Base-Reaktion, in Gegenwart des partikulären, amorphen Siliziumdioxids wieder beseitigt werden, wodurch im Ergebnis eine erhöhte Festigkeit solcher geschlichteter, wasserglasgebundener Gießereiformkörper im Vergleich mit dem Stand der Technik erreicht wird. Die Rolle von Verbindungen der Formel (I) bei diesem Vorgang könnte darin bestehen, dass sie unter Freisetzung des Säurebestandteils hydrolysiert werden und dadurch Säure in geeigneter Form und Menge zur Verfügung stellen, um zur erhöhten Festigkeit anorganisch gebundener Gießereiformkörper beizutragen.

In den zur erfindungsgemäßen Verwendung eingesetzten Schlichtezusammensetzungen können pH-Werte < 5 vorkommen, auch pH-Werte < 4 sind möglich, jeweils bestimmt aus der Suspension, vorzugsweise gemäß der Standard-Methode DIN 19260:2012-10. Die Anwesenheit von Säure in der wässrigen Phase ist nicht ausgeschlossen.

Bevorzugt ist eine erfindungsgemäße Verwendung einer oben genannten Schlichtezusammensetzung,
wobei der Bestandteil (d) eine oder mehrere Substanzen umfasst, ausgewählt aus der Gruppe bestehend aus Quarz, Aluminiumoxid, Zirkondioxid, Aluminiumsilicate, Schichtsilikate, Zirkonsilikate, Olivin, Talk, Glimmer, Graphit, Koks, Feldspat, Diatomit, Kaoline, kalzinierte Kaoline, Metakaolinit, Eisenoxid und Bauxit,
   und/oder
wobei die Schlichtezusammensetzung in oder als Bestandteil (c) ein partikuläres, amorphes Siliziumdioxid umfasst, welches als Nebenbestandteil (i) Zirkondioxid und/oder (ii) eine Lewis-Säure, vorzugsweise Zirkondioxid, umfasst.

Der "D90-Wert" der Primärpartikel des partikulären, amorphen Siliziumdioxids bezeichnet deren Teilchengrößenverteilung. Die Teilchengrößenverteilung wird auf an sich bekannte Weise durch Laserbeugung bestimmt, vorzugsweise nach der Standard-Methode gemäß DIN ISO 13320:2009-10. Hierbei ermittelte D90-Werte der Summenhäufigkeitsverteilung der volumengemittelten Größenverteilungsfunktion geben an, dass 90 Vol.-% der Primärpartikel eine Teilchengröße aufweisen, die gleich oder kleiner als der angegebene Wert (z.B. 10 µm) ist. Geeignete Geräte für die Bestimmung der Teilchengrößenverteilung sind an sich bekannte Laserbeugungsgeräte, z.B. vom Typ "Mastersizer 3000" der Fa. Malvern, Großbritannien, vorzugsweise vom Typ "Coulter LS 230" der Fa. Beckman Coulter, USA, wobei die Messung vorzugsweise mit Hilfe der "Polarization Intensity Differential Scattering" ("PIDS")-Technologie vorgenommen wird. Die Auswertung der Streulichtsignale erfolgt bei den vorgenannten Laserbeugungsmethoden jeweils vorzugsweise nach der Mie-Theorie, welche auch Brechungs- und Absorptionsverhalten der Primärpartikel berücksichtigt.

Sofern die Primärpartikel des partikulären, amorphen Siliziumdioxids als Agglomerate und/oder Aggregate und/oder in anderer Weise als Zusammenschlüsse mehrerer Primärpartikel vorliegen, werden diese vor Durchführung der Bestimmung der Teilchengrößenverteilung der Primärpartikel vorzugsweise auf an sich bekannte Weise schonend mechanisch oder in ähnlicher Weise getrennt, um eine Verfälschung des Ergebnisses soweit wie möglich auszuschließen.

Der Begriff "Nebenbestandteil" bedeutet im Rahmen der vorliegenden Erfindung, dass das partikuläre, amorphe Siliziumdioxid des Bestandteils (c) solche Nebenbestandteile nur in geringen Mengen enthält, die etwa noch als Verunreinigungen oder Anhaftungen aus vorangegangenen Herstellungs- und/oder Bearbeitungsverfahren des partikulären, amorphen Siliziumdioxids stammen können. Die genannten Nebenbestandteile sind vorzugsweise in einer Menge von nicht mehr als 18 Gew.-% (bzw. Massenanteil), besonders bevorzugt in einer Menge von nicht mehr als 12 Gew.-%, am meisten bevorzugt in einer Menge von nicht mehr als 8 Gew.-% vorhanden, jeweils bezogen auf die Gesamtmasse des partikulären amorphen Siliziumdioxids des Bestandteils (c).

Einer der vorgenannten Nebenbestandteile im Bestandteil (c) kann eine Lewis-Säure sein. Jedoch können auch mehrere Lewis-Säuren und/oder deren Mischungen umfasst sein. Unter "Lewis-Säure" wird im Rahmen der vorliegenden Erfindung eine Säure nach dem von G. N. Lewis vorgeschlagenen Konzept verstanden, wonach eine Säure ein Elektronenpaarakzeptor, d. h. ein Molekül oder Ion mit unvollständiger Edelgaskonfiguration ist, das ein von einer Lewis-Base zur Verfügung gestelltes Elektronenpaar aufnehmen und mit dieser ein sogenanntes Lewis-Addukt bilden kann. Eine Lewis-Säure ist elektrophil, während eine Lewis-Base nucleophil ist. Es können somit auch Moleküle und Ionen als Säuren aufgefasst werden, die nach den klassischen Vorstellungen keine Säuren sind.

Bevorzugt ist weiterhin eine erfindungsgemäße oder bevorzugte erfindungsgemäße Verwendung einer Schlichtezusammensetzung umfassend einen oder mehrere oder sämtliche der folgenden Bestandteile:
- ein oder mehrere Biozide,
- ein oder mehrere Netzmittel,
- ein oder mehrere rheologische Additive, und
- ein oder mehrere Bindemittel, vorzugsweise Polyvinylalkohol.

Als Biozide eignen sich übliche Biozide wie Mikrobizide, insbesondere Bakterizide, Algizide und/oder Fungizide. Vorzugsweise können die oben angegebenen Biozide eingesetzt werden. Als Netzmittel eignen sich vorzugsweise die oben angeführten Netzmittel. Als rheologische Additive eignen sich vorzugsweise die oben angeführten rheologische Additive. Als Bindemittel eignen sich vorzugsweise die oben angeführten Bindemittel. Polyvinylalkohol ist ein besonders bevorzugtes Bindemittel.

Ebenfalls bevorzugt ist eine erfindungsgemäße oder bevorzugte erfindungsgemäße Verwendung einer Schlichtezusammensetzung, wobei das Verhältnis der Gesamtmasse sämtlicher organischer Verbindungen der Formel (I) im Verhältnis zur Gesamtmasse der Schlichtezusammensetzung im Bereich von 0,1 bis 10 %, vorzugsweise im Bereich von 1 bis 5 %, vorzugsweise im Bereich von 2,5 bis 3,5 % liegt,
und/oder
wobei eine wässrige Phase vorliegt, für die gilt, dass das Verhältnis der Masse des Bestandteils (a) zur Gesamtmasse der wässrigen Phase größer ist als 50 %, bevorzugt größer als 70 %, besonders bevorzugt größer als 90 %,
   und/oder
wobei die Schlichtezusammensetzung einen Feststoffgehalt kleiner 80 Gew.-% besitzt, vorzugsweise kleiner 45 Gew.-%, bezogen auf die Gesamtmasse der Schlichtezusammensetzung,
   und/oder
wobei die Schlichtezusammensetzung einen Anteil an partikulärem, amorphem Siliziumdioxid des Bestandteils (c) im Bereich von 1 bis 30 Gew.-%, bevorzugt 5 bis 20 Gew.-%, besonders bevorzugt 8 bis 17 Gew.-% besitzt, bezogen auf die Gesamtmasse der Schlichtezusammensetzung,
   und/oder
wobei die Schlichtezusammensetzung einen Gesamtanteil an partikulärem, amorphem Siliziumdioxid des Bestandteils (c) und an weiteren Feuerfeststoffen des Bestandteils (d) im Bereich von 25 Gew.-% bis 80 Gew.-%, bevorzugt 30 bis 60 Gew.-%, besonders bevorzugt 45 bis 55 Gew.-% besitzt, bezogen auf die Gesamtmasse der Schlichtezusammensetzung.

Die Bestimmung des Feststoffgehaltes in zur erfindungsgemäßen Verwendung eingesetzten Schlichtezusammensetzungen erfolgt im Rahmen der vorliegenden Erfindung vorzugsweise jeweils gemäß Merkblatt P79 des Vereins Deutscher Gießereifachleute in der Fassung vom März 1976, Punkt 6.

Die erfindungsgemäß zu verwendende Schlichtezusammensetzung ist vorzugsweise gebrauchsfertig, ist also dazu vorgesehen, unmittelbar auf eine Gießform bzw. einen Kern appliziert zu werden. Die erfindungsgemäß zu verwendende Schlichtezusammensetzung kann aber auch als Konzentrat vorliegen, ist dann also dazu vorgesehen, vor der Applikation auf eine Gießform bzw. einen Kern verdünnt zu werden, insbesondere durch Zugabe von Wasser oder einer wässrigen Mischung. Dies gilt für sämtliche Ausgestaltungen der vorliegenden Erfindung, sofern nicht anders angegeben oder spezifiziert. Der Fachmann entscheidet im Einzelfall, ob eine Schlichtezusammensetzung gebrauchsfertig ist oder noch verdünnt werden sollte.

Eine weitere bevorzugte Ausführungsform der vorliegenden Erfindung ist eine erfindungsgemäße oder bevorzugte erfindungsgemäße Verwendung einer Schlichtezusammensetzung, umfassend ein oder mehrere Bindemittel, vorzugsweise umfassend Polyvinylalkohol, in einer Gesamtmenge von nicht mehr als 2 Gew.-%, bevorzugt in einer Menge im Bereich von 0,05 bis 0,80 Gew.-%, bezogen auf die Gesamtmasse der Schlichtezusammensetzung.

Bevorzugt ist eine Ausführungsform dieser erfindungsgemäßen Verwendung, wobei die Herstellung des Überzugs auf der Form bzw. dem Kern durch ein Auftragungsverfahren ausgewählt aus der Gruppe bestehend aus Sprühen, Tauchen, Fluten und Streichen, vorzugsweise Tauchen, erfolgt.

Besonders bevorzugt ist eine erfindungsgemäße oder bevorzugte erfindungsgemäße Verwendung, wobei die wasserglasgebundene Form bzw. der wasserglasgebundene Kern partikuläres, amorphes Siliziumdioxid enthält (vorzugsweise neben beispielsweise einem oder mehreren herkömmlichen körnigen Formgrundstoffen)
und/oder
wobei die Applikation der Schlichtezusammensetzung auf einer wasserglasgebundenen Form bzw. einem wasserglasgebundenen Kern zur Verwendung beim Eisen- oder Stahlguss erfolgt
   und/oder
wobei die Applikation der Schlichtezusammensetzung auf einer wasserglasgebundenen Form bzw. einem wasserglasgebundenen Kern zur Verwendung beim Abguss einer Metallschmelze mit einer Temperatur > 900 °C, bevorzugt > 1250 °C, erfolgt, vorzugsweise zur Verwendung beim Abguss einer Metallschmelze umfassend Eisen und/oder Stahl,
   und/oder
wobei die Applikation der Schlichtezusammensetzung auf einer wasserglasgebundenen Form bzw. einem wasserglasgebundenen Kern bei einer Temperatur des wasserglasgebundenen Kerns bzw. der wasserglasgebundenen Form von > 50 °C, bevorzugt > 70 °C erfolgt, besonders bevorzugt bei einer Temperatur < 100 °C. Überraschender Weise entsteht unter diesen Bedingungen bzw. bleibt unter diesen Bedingungen eine für nachfolgende Be- bzw. Verarbeitungsschritte brauchbare Form bzw. ein brauchbarer Kern erhalten.

Bevorzugt ist eine vorstehend beschriebene Verwendung als Mittel zur Verringerung der durch das Schlichten mit der wasserhaltigen Schlichte verursachten Beeinträchtigung der Biegefestigkeit eines wasserglasgebundenen Kerns oder einer wasserglasgebundenen Form, wobei der wasserglasgebundene Kern bzw. die wasserglasgebundene Form partikuläres, amorphes Siliziumdioxid enthält.

Weiterhin ist Gegenstand der Erfindung auch ein Verfahren zur Herstellung einer mit einer wasserhaltigen Schlichte geschlichteten Form, vorzugsweise einer solchen Form mit einer hohen Biegefestigkeit, oder eines mit einer wasserhaltigen Schlichte geschlichteten Kerns, vorzugsweise eines solchen Kerns mit einer hohen Biegefestigkeit, zur Verwendung in der Gießerei, mit folgenden Schritten:
(1) Bereitstellen oder Herstellen einer Schlichtezusammensetzung wie als zur erfindungsgemäßen Verwendung und/oder als zur erfindungsgemäß bevorzugten Verwendung eingesetzt offenbart,
(2) Bereitstellen oder Herstellen einer ungeschlichteten Form oder eines ungeschlichteten Kerns, wobei die bereitgestellte oder hergestellte ungeschlichtete Form wasserglasgebunden ist bzw. der bereitgestellte oder hergestellte ungeschlichtete Kern wasserglasgebunden ist, und
(3) Auftragen der bereitgestellten oder hergestellten Schlichtezusammensetzung aus Schritt (1) auf die in Schritt (2) bereitgestellte oder hergestellte Form bzw. den bereitgestellten oder hergestellten Kern.

Alle für die erfindungsgemäße Verwendung der Schlichtezusammensetzung angegebenen Aspekte, insbesondere deren bevorzugte Merkmale und Kombinationen von Merkmalen, sind *mutatis mutandis* auch auf das erfindungsgemäße Verfahren zur Herstellung einer mit einer wasserhaltigen Schlichte geschlichteten Form anwendbar.

Im Rahmen der vorliegenden Erfindung ist mit einer "hohen Biegefestigkeit" eine Biegefestigkeit eines Gießereiformkörpers, vorzugsweise eines Kerns oder einer Form, gemeint, welche eine praktische Handhabung des Gießereiformkörpers erlaubt, ohne dass dieser zerbricht.

Die in Schritt (1) des erfindungsgemäßen Verfahrens bereitgestellte oder hergestellte Schlichtezusammensetzung kann nach an sich bekannten Verfahren hergestellt werden. Beispielsweise kann Wasser in geeigneter Menge vorgelegt werden und die weiteren Bestandteile zur Herstellung der Schlichtezusammensetzung können dann in jeweils gewünschter Menge zu dieser Vorlage unter Rühren mit einem geeigneten Rührer wie einem hochscherenden Rührer, z.B. einem Zahnradrührer oder einem Dissolverrührer, hinzugegeben werden. Sofern nötig, können Bestandteile vor oder während der Zugabe auf an sich bekannte Weise aufgeschlossen werden. So können z.B. gegebenenfalls ein oder mehrere rheologische Additive unter Einsatz eines hochscherenden Rührers, vor oder nach Hinzugabe zu der Wasser-Vorlage und einzeln oder zusammen mit einem oder mehreren Feuerfeststoffen, aufgeschlossen werden. Sofern die einen oder mehreren Feuerfeststoffe nicht gemeinsam mit den gegebenenfalls zugegebenen rheologischen Additiven aufgeschlossen werden, können sie auch einzeln aufgeschlossen und zu der Wasser-Vorlage hinzugegeben werden. Anschließend können dann z.B. die weiteren Bestandteile der Schlichtezusammensetzung zu der - gegebenenfalls rheologische Additive und/oder Feuerfeststoffe enthaltenden - Wasser-Vorlage in beliebiger Reihenfolge und vorzugsweise unter Rühren, vorzugsweise mit einem hochscherenden Rührer, hinzugegeben werden, so etwa ein oder mehrere Schlichtebindemittel, gegebenenfalls ein oder mehrere Biozide, gegebenenfalls ein oder mehrere Netzmittel, gegebenenfalls ein oder mehrere Entschäumer, gegebenenfalls ein oder mehrere Pigmente und/oder gegebenenfalls ein oder mehrere Farbstoffe.

Die in Schritt (1) des erfindungsgemäßen Verfahrens bereitgestellte oder hergestellte Schlichtezusammensetzung kann zum Auftragen auf Gießereiformkörper gebrauchsfertig sein, also beispielsweise in einer Konzentration vorliegen, die zur Verwendung als Tauchbad für Formen oder Kerne geeignet ist. Ebenso kann die vorgenannte Schlichtezusammensetzung auch in an sich bekannter Weise zuerst als Konzentrat hergestellt werden, welches erst später, z.B. erst kurz vor der Verwendung der Schlichtezusammensetzung, z.B. durch weitere Zugabe von Wasser zu einer gebrauchsfertigen Konzentration (bzw. Konsistenz) verdünnt wird, die sich dann zum Auftragen auf Formen und/oder Kerne eignet. Sofern im Rahmen der vorliegenden Erfindung Mengen oder Verhältnisse bezüglich der erfindungsgemäß verwendeten Schlichtezusammensetzung angegeben sind, ist jeweils eine gebrauchsfertige Schlichtezusammensetzung (die dazu vorgesehen ist, unmittelbar auf eine Gießform bzw. einen Kern appliziert zu werden) gemeint, soweit nicht ausdrücklich anders angegeben. Es ist in der Regel nicht notwendig, die einzelnen Bestandteile der erfindungsgemäß zu verwendenden Schlichtezusammensetzung erst unmittelbar vor einem bestimmungsgemäßen Beschichtungsvorgang auf Formen oder Kerne miteinander zu vermischen, vielmehr kann das Vermischen sehr viel früher erfolgen, weil die Lagerstabilität der erfindungsgemäß zu verwendenden Schlichtezusammensetzung hoch ist.

Die in Schritt (2) des erfindungsgemäßen Verfahrens bereitgestellte oder hergestellte ungeschlichtete, wasserglasgebundene Form oder der bereitgestellte oder hergestellte ungeschlichtete, wasserglasgebundene, Kern kann auf an sich bekannte Weise hergestellt werden, beispielsweise wie in den Dokumenten WO 2006/024540 oder WO 2009/056320 beschrieben.

Das Auftragen in Schritt (3) der bereitgestellten oder hergestellten Schlichtezusammensetzung aus Schritt (1) auf die bereitgestellte oder hergestellte Form bzw. den bereitgestellten oder hergestellten Kern nach Schritt (2) des erfindungsgemäßen Verfahrens kann auf an sich bekannte Weise erfolgen, vorzugsweise gemäß den vorstehend als geeignet angegebenen Auftragsverfahren, besonders bevorzugt durch Tauchen der Form oder des Kerns in einer als Tauchbad bereitgestellten erfindungsgemäß verwendeten Schlichtezusammensetzung.

Bevorzugt ist ein erfindungsgemäßes oder bevorzugtes erfindungsgemäßes Verfahren, wobei die bereitgestellte oder hergestellte ungeschlichtete Form bzw. der bereitgestellte oder hergestellte ungeschlichtete Kern partikuläres, amorphes Siliziumdioxid enthält,
und/oder
wobei das Herstellen der ungeschlichteten Form oder des ungeschlichteten Kerns in Schritt (2) durch Aushärten einer bereitgestellten oder hergestellten Formstoffmischung
- durch die Begasung mit Kohlenstoffdioxid,
- durch die Zumischung von Estern oder Phosphaten
   oder
- durch Begasung mit heißer Luft in einem beheizten Werkzeug
erfolgt.

Die vorstehend angegebenen Verfahren zur Aushärtung einer bereitgestellten oder hergestellten Formstoffmischung sind an sich bekannt. Als Phosphate, welche zur Aushärtung geeignet sind, können beispielsweise Aluminiumphosphate eingesetzt werden.

Bevorzugt ist in einer weiteren Ausführungsform ein erfindungsgemäßes oder bevorzugtes erfindungsgemäßes Verfahren, wobei das Auftragen auf die bereitgestellte oder hergestellte ungeschlichtete Form bzw. den bereitgestellten oder hergestellten ungeschlichteten Kern bei einer Temperatur der bereitgestellten oder hergestellten Form bzw. des bereitgestellten oder hergestellten Kerns von > 50 °C, bevorzugt > 70 °C erfolgt, besonders bevorzugt bei einer Temperatur < 100 °C,
und/oder
wobei das Auftragen auf die bereitgestellte oder hergestellte ungeschlichtete Form bzw. den bereitgestellten oder hergestellten ungeschlichteten Kern durch ein Auftragungsverfahren, ausgewählt aus der Gruppe bestehend aus Sprühen, Tauchen, Fluten und Streichen, vorzugsweise Tauchen, erfolgt.

Weiterhin ist Gegenstand der Erfindung eine geschlichtete Form oder ein geschlichteter Kern zur Verwendung in der Gießerei, jeweils umfassend eine Schlichtezusammensetzung wie als zur erfindungsgemäßen oder erfindungsgemäß bevorzugten Verwendung offenbart. In einer Variante der vorliegenden Erfindung ist die geschlichtete Form oder der geschlichtete Kern jeweils herstellbar nach einem wie vorstehend als erfindungsgemäß oder als erfindungsgemäß bevorzugt offenbarten Verfahren zur Herstellung einer mit einer wasserhaltigen Schlichte geschlichteten Form oder eines mit einer wasserhaltigen Schlichte geschlichteten Kerns.

Erfindungsgemäß ist die vorstehend angegebene erfindungsgemäße geschlichtete Form und/oder ist der vorstehend angegebene erfindungsgemäße geschlichtete Kern jeweils wasserglasgebunden.

Vorzugsweise enthält die vorstehend angegebene erfindungsgemäße geschlichtete Form und/oder der vorstehend angegebene erfindungsgemäße geschlichtete Kern jeweils partikuläres, amorphes Siliziumdioxid
Ebenfalls Gegenstand der vorliegenden Erfindung ist eine vorgenannte erfindungsgemäße und/oder bevorzugte erfindungsgemäße geschlichtete Form oder ein vorgenannter erfindungsgemäßer und/oder bevorzugter erfindungsgemäßer geschlichtete Kern zur Verwendung beim Abguss einer Metallschmelze mit einer Temperatur > 900 °C, bevorzugt > 1250 °C, vorzugsweise zur Verwendung beim Abguss einer Metallschmelze umfassend Eisen und/oder Stahl.

Weiter ist auch Gegenstand der Erfindung ein Kit, enthaltend in separaten Komponenten
(U) eine im erfindungsgemäßen oder bevorzugt erfindungsgemäßen Verfahren beschriebene Schlichtezusammensetzung zur Herstellung eines Überzugs auf einer wasserglasgebundenen Form bzw. einem wasserglasgebundenen Kern, zur Verwendung in der Gießerei,
(V) ein Bindemittel umfassend Wasserglas, und
(W) partikuläres, amorphes Siliziumdioxid.

Es wurde gefunden, dass die zur erfindungsgemäßen Verwendung eingesetzte Schlichtezusammensetzung insbesondere die folgenden Vorteile gegenüber aus dem Stand der Technik bekannten vergleichbaren Schlichtezusammensetzungen aufweist und/oder begründet:
- insbesondere eine verbesserte Lagerstabilität der damit herstellbaren geschlichteten anorganisch gebundenen, vorzugsweise der damit herstellbaren wasserglasgebundenen Formen und/oder Kerne;
- insbesondere eine verbesserte Beständigkeit gegenüber Luftfeuchtigkeit der damit herstellbaren geschlichteten anorganisch gebundenen, vorzugsweise der damit herstellbaren wasserglasgebundenen Formen und/oder Kerne;
- eine vergleichbare oder sogar verbesserte Lagerstabilität der Schlichtezusammensetzung (gegenüber aus dem Stand der Technik bekannten Schlichtezusammensetzungen);
- eine verbesserte Möglichkeit der Applikation auf heiße Formen und/oder Kerne (d.h. vorzugsweise auf solche Formen und/oder Kerne, welche Temperaturen von mehr als 50 °C, vorzugsweise Temperaturen im Bereich von 50 bis 100 °C, aufweisen) - durch diese Eigenschaft kann beispielsweise eine raschere Bearbeitungsfolge in der Massenfertigung und im Idealfall ein höherer Stückdurchsatz pro Zeiteinheit möglich sein;
- eine verbesserte Einsatzmöglichkeit von anorganisch, insbesondere Wasserglas-, gebundenen Gießereiformkörpern, insbesondere von Formen und/oder Kernen, für den Eisen- und/oder Stahlguss, durch entsprechende Verwendung der erfindungsgemäßen Schlichten bzw. Schlichtenzusammensetzungen und/oder
- eine verbesserte Festigkeit der damit herstellbaren geschlichteten anorganisch gebundenen, vorzugsweise der damit herstellbaren wasserglasgebundenen Formen und/oder Kerne.

Diese Vorteile gelten *mutatis mutandis* für die weiteren Gegenstände bzw. Aspekte der vorliegenden Erfindung.

### Beispiele:

Die nachstehend angegebenen Beispiele sollen die Erfindung näher beschreiben und erklären, ohne ihren Umfang zu beschränken.

### Beispiel 1: Herstellung von Schlichtezusammensetzungen.

Es wurden die in Tabelle 1 angegebenen erfindungsgemäßen Schlichtezusammensetzungen ("SZ1", "SZ2") sowie die nicht-erfindungsgemäßen Vergleichs-Schlichtezusammensetzungen ("SZ3" bzw. "SZ4") auf an sich bekannte Weise durch Vermischen der jeweils angegebenen Inhaltsstoffe miteinander hergestellt.

Hierzu wurde jeweils in einem Becherglas die benötigte Menge an Wasser vorgelegt (Ansatzgrö-ße jeweils ca. 2 kg Schlichtezusammensetzung als "Konzentrate", vgl. Tabelle 1), die rheologischen Additive und die Feuerfeststoffe (Schichtsilikate, Zirkonmehl, Graphit) hinzugegeben und anschließend mit einem hochscherenden Dissolverrührer 3 min. lang auf an sich bekannte Weise aufgeschlossen. Dann wurden die weiteren Bestandteile der Schlichtezusammensetzungen (vgl. Tabelle 1) in den angegebenen Mengenverhältnissen zugegeben und es wurde für weitere 2 Minuten mit einem hochscherenden Dissolverrührer gerührt. Man erhielt jeweils die in Tabelle 1 angegebenen verdünnbaren Konzentrate von Schlichtezusammensetzungen.

Die Angaben zu "DIN-Vermahlungen" in Tabelle 1 bedeuten, dass der jeweils angegebene Bestandteil der Schlichtezusammensetzung im vermahlenen Zustand vorliegt, wobei nach dem Sieben einer Probe dieses Bestandteils mit einem Analysensieb mit einer Nennmaschenweite in µm, die dem angegebenen Zahlenwert entspricht (z.B.: "80" bedeutet "Analysensieb mit Maschenweite 80 µm") (nach DIN ISO 3310-1:2001-09), jeweils ein Rückstand im Bereich von 1 bis 10 Gew.-% verbleibt, bezogen auf die eingesetzte Probenmenge.

**Tabelle 1: Erfindungsgemäße und nicht-erfindungsgemäße Schlichtezusammensetzungen (jeweils erhalten als verdünnbare "Konzentrate")**

| **Schlichtezusammensetzungen: ("Konzentrate")** | **SZ1** | **SZ2** | **SZ3** | **SZ4** |
|---|---|---|---|---|
| Inhaltsstoffe: | [Gew.-%] | [Gew.-%] | [Gew.-%] | [Gew.-%] |
| Wasser | 43,3 | 42,9 | 46,0 | 47,1 |
| Rheologisches Additiv | 1,5 | 1,5 | 5,0 | 1,5 |
| Schichtsilikat (Pyrophyllit DIN 140 Vermahlung) | ./. | ./. | 26,0 | 11,0 |
| Schichtsilikat (Glimmer DIN 160 Vermahlung) | 12,0 | 12,0 | ./. | 18,0 |
| Zirkonmehl (Zirkonsilikat, DIN 60 Vermahlung) | 13,5 | 13,5 | 9,0 | 10,0 |
| Graphit (DIN 80 Vermahlung) | 11,0 | 11,0 | 8,0 | 11,0 |
| Polyvinylacetat | ./. | ./. | 0,9 | ./. |
| Biozid (Benzisothiazolinon-Lösung, 10%-ige (Gew./Gew.) wässrige Lösung) | 0,3 | 0,3 | 0,3 | 0,3 |
| Modifizierte Stärke | ./. | ./. | 0,3 | ./. |
| Polyvinylalkohol | 0,4 | 0,4 | ./. | 0,4 |
| Eisenoxid (gelb) | ./. | ./. | 1,2 | ./. |
| Netzmittel | 0,6 | 0,1 | 0,3 | 0,6 |
| Entschäumer | 0,1 | 1,0 | ./. | 0,1 |
| Propylencarbonat | 3,0 | 3,0 | 3,0 | ./. |
| Partikuläres, amorphes Siliziumdioxid | 14,3 | 14,3 | ./. | ./. |
| SUMME: | 100,0 | 100,0 | 100,0 | 100,0 |

Die vorstehend in Tabelle 1 angegebenen verdünnbaren Konzentrate von Schlichtezusammensetzungen wurden anschließend zur Herstellung von für den hier vorgesehenen Zweck gebrauchsfertigen Schlichtezusammensetzungen (zum Auftragen auf Formen bzw. Kerne mittels eines Tauchprozesses, vorzugsweise in Form eines Tauchbades) mit Wasser verdünnt. Die jeweils angewendete Verdünnung sowie weitere Eigenschaften der durch die angewendete Verdünnung jeweils entstandenen gebrauchsfertigen Schlichtezusammensetzungen sind nachstehend in Tabelle 1a angegeben:

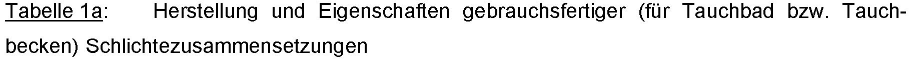

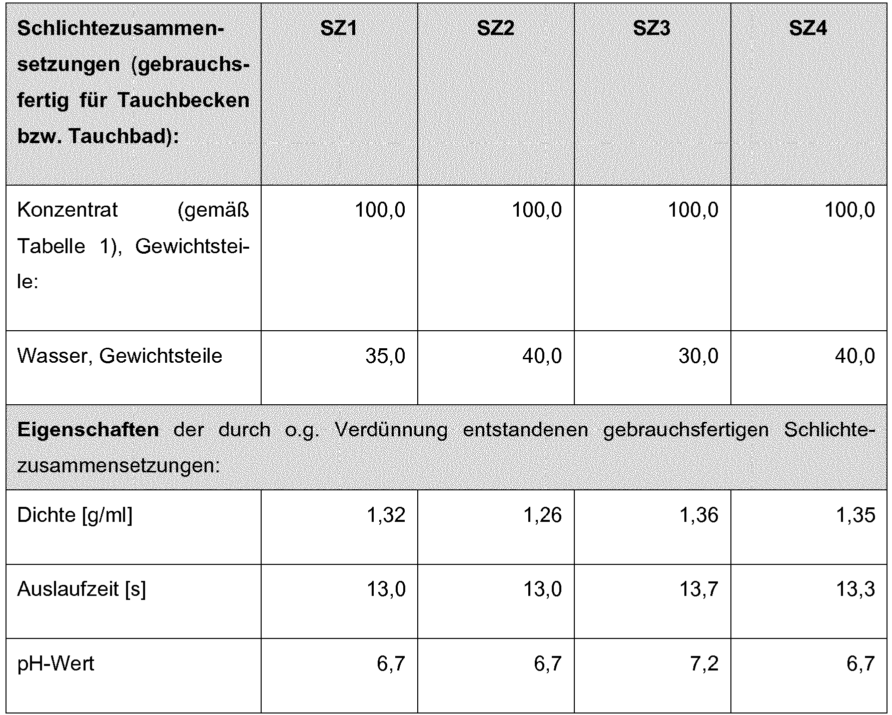

Wie aus Tabelle 1a ersichtlich ist, wurden die Schlichtezusammensetzungen für den hier vorgesehenen Zweck, das Auftragen auf Versuchskerne mittels einer Tauchapplikation bzw. eines Tauchbades, so hergestellt, dass eine gute Vergleichbarkeit (i) ihrer jeweiligen Eigenschaften beim Auftragen auf die Versuchskerne sowie (ii) der daraus jeweils resultierenden Eigenschaften der beschichteten Versuchskerne gewährleistet war (möglichst ähnliche Dichten und Auslaufzeiten wurden eingestellt).

Die in Tabelle 1a angegebenen Dichten der gebrauchsfertigen Schlichtezusammensetzungen wurden gemäß der Standard-Prüfmethode DIN EN ISO 2811-2:2011 (Verfahren A) gemessen.

Die in Tabelle 1a angegebenen Auslaufzeiten der gebrauchsfertigen Schlichtezusammensetzungen wurden gemäß der Standard-Prüfmethode DIN 53211 (1974) durch Bestimmung mit dem DIN-Becher 4 gemessen.

Die in Tabelle 1a angegebenen pH-Werte der gebrauchsfertigen Schlichtezusammensetzungen wurden entsprechend der Standard-Prüfmethode DIN 19260:2012-10 jeweils aus der Suspension gemessen.

Die Schlichtezusammensetzungen SZ1, SZ2 und SZ4 enthielten als rheologisches Additiv jeweils Attapulgit. Schlichtezusammensetzung SZ3 ist von dem in Dokument WO00/05010 beschriebenen Typ.

### Beispiel 2: Untersuchung der Aufweichung von Gießereikernen

Zur Ermittlung der Aufweichung von Gießereikernen (d.h. des maximalen Abfalls der Biegefestigkeit) wurden auf an sich bekannte Weise Versuchskerne (Prüfkörper; gemäß dem in Tabelle 4 angegebenen "Kernsystem 1") hergestellt in einer Kernschießmaschine der Fa. Multiserw (Typ LUT, Begasungsdruck: 2 bar, Schusszeit: 3,0 s; Schießdruck 4,0 bar). Eine Stunde nach Kernherstellung wurden die Versuchskerne mit den o.g. gebrauchsfertigen Schlichtezusammensetzungen "SZ1", "SZ3" bzw. "SZ4" (vgl. Tabelle 1a) bei Raumtemperatur (25 °C) durch Tauchen (Bedingungen: 1s Eintauchen; 3s Haltezeit in der Schlichtezusammensetzung, 1s Austauchen) überzogen (geschlichtet). Die Nassschichtdicke der Schlichten wurde dabei auf jeweils etwa 250 µm eingestellt. Anschließend wurden die geschlichteten Versuchskerne unter den unten angegebenen Bedingungen (1 Stunde bei 120 °C) im Umluftofen getrocknet und dabei jeweils die Veränderung ihrer Biegefestigkeit unter den Trocknungsbedingungen untersucht.

Die geschlichteten Versuchskerne wurden jeweils über einen Zeitraum von einer Stunde getrocknet, wobei ihre Biegefestigkeiten (in N/cm², entsprechend der Definition wie angegeben im Merkblatt R 202 des Vereins Deutscher Gießereifachleute, Ausgabe Oktober 1978) zu verschiedenen Zeitpunkten während der Trocknung und dann noch einmal eine Stunde nach Ende des Trocknungsvorgangs mit einem Standard-Prüfgerät vom Typ "Multiserw-Morek LRu-2e" gemessen wurden, jeweils mit einem Standard-Messprogramm "Rg1v_B 870,0 N/cm²" (3-Punkt-Biegefestigkeit).

In Tabelle 2 sind für die untersuchten geschlichteten Versuchskerne jeweils die Werte für den maximalen Abfall der Biegefestigkeit innerhalb des genannten Zeitraums unter Trocknungsbedingungen in % angegeben, jeweils bezogen auf die Biegefestigkeit des jeweiligen frisch geschlichteten (noch nassen) Versuchskernes vor Trocknungsbeginn (Ausgangswert).

**Tabelle 2: Festigkeitsabfall geschlichteter Versuchskerne unter Trocknungsbedingungen**

| **Schlichtetyp auf Versuchskern** | **Maximaler Abfall der Biegefestigkeit bei Trocknung, auf % des Ausgangswertes** | **Beobachtung von Kernversagen während der Trocknung** |
|---|---|---|
| SZ 1 | 72 | Nein |
| SZ 3 | 25 | Nein |
| SZ 4 | 0 | Ja |

Der Ausdruck "Kernversagen" besagt hier und im Folgenden jeweils, dass ein geschlichteter Kern während des Trocknungsprozesses unbrauchbar wurde, d.h. der geschlichtete Kern war jeweils für die Messung der Biegefestigkeit sowie für einen nachfolgend vorgesehenen Abguss unbrauchbar.

Aus den in Tabelle 2 angegebenen Werten ist u.a. zu ersehen, dass der maximale Abfall der Biegefestigkeit eines Versuchskerns, welcher mit einer erfindungsgemäßen Schlichtezusammensetzung geschlichtet wurde (SZ1), deutlich geringer ausfällt, als mit nicht-erfindungsgemäßen Vergleichs-Schlichtezusammensetzungen (SZ3 bzw. SZ4). Weiter ist aus den Werten in Tabelle 2 zu ersehen, dass mit der nicht-erfindungsgemäßen Vergleichs-Schlichtezusammensetzung SZ4 unter den gewählten Bedingungen keine brauchbaren geschlichteten Kerne hergestellt werden konnten.

### Beispiel 3: Untersuchung der Lagerstabilität von geschlichteten und ungeschlichteten Gießereikernen

Zur Ermittlung der Lagerstabilität wurden auf an sich bekannte Weise wasserglasgebundene Versuchskerne (Prüfkörper) hergestellt und ihre Biegefestigkeiten wurden jeweils ungeschlichtet kurz nach ihrer Herstellung (eine Stunde Lagerzeit, relative Luftfeuchtigkeit im Bereich von 30 bis 60 %, Lagertemperatur im Bereich von 20 bis 25 °C) wie oben angegeben bestimmt , vgl. Tabelle 3 (Eintrag "Ungeschlichtet nach 1 h").

Zudem wurden entsprechende Versuchskerne wie unten in Tabelle 3 angegeben eine Stunde nach Kernherstellung (d.h. in jeweils gleichem zeitlichen Abstand zu ihrer Herstellung) bei Raumtemperatur (25 °C) mit den Schlichtezusammensetzungen SZ1 bzw. SZ4 jeweils durch Tauchen (Bedingungen: 1s Eintauchen; 3 s Haltezeit in der Schlichtezusammensetzung, 1s Austauchen) geschlichtet (Bezeichnung der Schlichtezusammensetzungen wie in Beispiel 1) und anschließend jeweils für eine Stunde bei 120 °C im Umluftofen getrocknet. Die geschlichteten, getrockneten Versuchskerne wurden dann für die Dauer von sieben Tagen einem Lagertest unterzogen (soweit die Herstellung des geschlichteten Kerns möglich war bzw. soweit nicht zuvor das Versagen des Kerns festgestellt wurde). Die Temperatur während der Lagerung betrug jeweils 35 °C, die relative Luftfeuchtigkeit betrug jeweils 75 %. Nach Abschluss des Lagertests wurden die Biegefestigkeiten der Versuchskerne wie oben angegeben bestimmt. Die Ergebnisse dieses Lagertests sind unten in Tabelle 3 angegeben. Es wurden für alle Versuche in Beispiel 3 Versuchskerne ("Kernsystem 1") verwendet, deren Herstellungsbedingungen unten in Tabelle 4 angegeben sind.

**Tabelle 3: Bestimmung der Lagerstabilität geschlichteter und ungeschlichteter Gießereikerne**

| **Kernsystem** | **Ungeschlichtet nach 1 h** | **Geschlichtet mit Typ SZ1 nach Lagerung** | **Geschlichtet mit Typ SZ4 nach Lagerung** | **Ungeschlichtet bei Lagerung** |
|---|---|---|---|---|
| | Biegefestigkeit [N/cm²] | | | |
| 1 | 300 | 131 | nicht bestimmbar | Kernversagen nach 131 min. |

Aus den in Tabelle 3 angegebenen Werten ist u.a. zu ersehen, dass ein mit einer erfindungsgemäßen Schlichtezusammensetzung (SZ1) geschlichteter Versuchskern nach einer siebentägigen Lagerung noch > 40 % der Ausgangsfestigkeit aufwies, während ein mit einer nicht-erfindungsgemäßen Vergleichs-Schlichtezusammensetzung (SZ4) geschlichteter Versuchskern unter vergleichbaren Bedingungen unbrauchbar war; seine Biegefestigkeit war unter den oben definierten Bedingungen nicht mehr bestimmbar, da er während der Auslagerung zerbrach. Ein ungeschlichteter Vergleichs-Kern versagte unter den Versuchsbedingungen bereits nach 131 min., d.h. das Auftragen einer erfindungsgemäßen Schlichtezusammensetzung auf einen Versuchskern führte bereits zu einer Stabilisierung des Versuchskerns unter Trocknungsbedingungen.

**Tabelle 4: Herstellungsbedingungen für Kernsystem 1**

| **Parameter** | **Kernsystem 1** |
|---|---|
| Formstoff (100 Gewichtsteile) | Quarzsand |
| Bindemittel (2,2 Gewichtsteile) | Alkali-Wasserglaslösung, 25-35 Gew.-% Wasserglasgehalt in Wasser (Gew./Gew.) |
| Additiv (1,0 Gewichtsteile) | Partikuläres, amorphes Siliziumdioxid |
| Kernkastentemperatur | 120 °C |
| Begasungstemperatur | 150 °C |
| Aushärtezeit | 30 s |

Das Kernsystem 1 bestand nur aus den Bestandteilen Formstoff, Bindemittel und Additiv, wie in Tabelle 4 angegeben:
Das für das Kernsystem 1 in Tabelle 4 angegebene Bindemittel war ein handelsübliches AlkaliWasserglas-Bindemittel "Cordis^{®} 8511" (HA International).

Das für das Kernsystem 1 in Tabelle 4 angegebene Additiv war ein handelsübliches Binder-Additiv mit dem Hauptbestandteil (≥ 95 Gew.-%) partikuläres, amorphes Siliziumdioxid, "Anorgit^{®} 8396" (Hüttenes-Albertus Chemische Werke GmbH).

### Beispiel 4: Untersuchung zur Biegefestigkeit geschlichteter Gießereikerne

Es wurden auf an sich bekannte Weise (analog wie in Beispiel 2 beschrieben, aber nach zwischenzeitlicher Wartung der eingesetzten Kernschießmaschine) wasserglasgebundene Versuchskerne (Prüfkörper) hergestellt und ihre Biegefestigkeiten wurden zu Vergleichszwecken jeweils ungeschlichtet kurz nach ihrer Herstellung (eine Stunde Lagerzeit bei einer Temperatur im Bereich von 20 bis 25 °C, relative Luftfeuchtigkeit 30 bis 60 %) wie oben angegeben bestimmt (zu den Herstellungsbedingungen der Versuchskerne siehe Tabelle 6).

Zudem wurden Versuchskerne wie unten in Tabelle 5 angegeben bei unterschiedlichen Kerntemperaturen durch Tauchen (Bedingungen: 1s Eintauchen; 3s Haltezeit; in der Schlichtezusammensetzung, 1s Austauchen) geschlichtet (Bezeichnung der Schlichtezusammensetzungen wie in Beispiel 1) und jeweils für eine Stunde bei 120 °C im Umluftofen getrocknet. Nach Abkühlung auf Raumtemperatur und einer Lagerzeit von 24 Stunden (relative Luftfeuchtigkeit im Bereich von 30 bis 60 %, Temperatur im Bereich von 20 bis 25 °C) wurden an den geschlichteten, getrockneten Versuchskernen dann die Biegefestigkeiten wie oben angegeben bestimmt.

Die Ergebnisse der Bestimmungen der Biegefestigkeiten sind unten in Tabelle 5 angegeben. Hierbei wurden jeweils zwei verschiedene Versuchskerne ("Kernsystem A" und "Kernsystem B") verwendet, deren Herstellungsbedingungen jeweils unten in Tabelle 6 angegeben sind.

**Tabelle 5: Bestimmung der Biegefestigkeiten geschlichteter und ungeschlichteter Gießereikerne**

| | **Ungeschlichtet nach 1 h** | **Geschlichtet mit Typ SZ1** | **Geschlichtet mit Typ SZ2** | **Geschlichtet mit Typ SZ2** | **Geschlichtet mit Typ SZ4** |
|---|---|---|---|---|---|
| Kerntemperatur | ./. | 25 °C | 50 °C | 90 °C | 25 °C |
| Kernsystem | Biegefestigkeit [N/cm²] | | | | |
| A | 350 | 260 | 320 | 330 | Herstellung eines geschlichteten Kerns nicht möglich |
| B | 350* | 250 | nicht bestimmt | nicht bestimmt | Herstellung eines geschlichteten Kerns nicht möglich |

| | | | | | |
|---|---|---|---|---|---|
| * Abweichung des Messwerts vom entsprechenden Wert in Tabelle 3 für Kernsystem 1 wird im Wesentlichen als Auswirkung der Wartung der Kernschießmaschine aufgefasst. | | | | | |

Aus den in Tabelle 5 angegebenen Werten ist zu ersehen, dass mit erfindungsgemäßen Schlichtezusammensetzungen bei unterschiedlichen Kerntemperaturen geschlichtete Gießereikerne hohe Biegefestigkeiten erreichen. Insbesondere zeigen die in Tabelle 5 angegebenen Werte, dass mit erfindungsgemäßen Schlichtezusammensetzungen (SZ1, SZ2) Gießereikerne erfolgreich auch bei höheren Kerntemperaturen, etwa bei Kerntemperaturen im Bereich von 50 bis 100 °C, mit gutem Erfolg (hohe Biegefestigkeiten) geschlichtet werden können. Mit nicht-erfindungsgemäßen Vergleichs-Schlichtezusammensetzungen (SZ4) waren unter vergleichbaren Bedingungen hingegen keine brauchbaren Kerne herzustellen, sondern diese versagten während der Trocknung.

**Tabelle 6: Herstellungsbedingungen für Kernsysteme A und B**

| **Parameter** | **Kernsystem A** | **Kernsystem B** |
|---|---|---|
| Formstoff | Quarzsand (100,0 Gewichtsteile) | Quarzsand (100,0 Gewichtsteile) |
| Bindemittel | Alkali-Wasserglaslösung, 25-35 Gew.-% Wasserglasgehalt in Wasser (Gew./Gew.) (2,2 Gewichtsteile) | Alkali-Wasserglaslösung, 25-35 Gew.-% Wasserglasgehalt in Wasser (Gew./Gew.) (2,2 Gewichtsteile) |
| Additiv | Partikuläres, amorphes Siliziumdioxid (1,0 Gewichtsteile) | Partikuläres, amorphes Siliziumdioxid (1,0 Gewichtsteile) |
| Kernkastentemperatur | 120 °C | 120 °C |
| Begasungstemperatur | 150 °C | 150 °C |
| Aushärtezeit | 50 s | 30 s |

Die für die Kernsysteme A und B in Tabelle 6 angegebenen Bindemittel und Additive entsprachen jeweils den zu Tabelle 4 angegebenen Bindemitteln ("Cordis^{®} 8511") bzw. Additiven ("Anorgit^{®} 8396").

Die oben genannten Kernsysteme A, B und C bestanden jeweils nur aus den Bestandteilen Formstoff, Bindemittel und gegebenenfalls Additiv, wie in Tabelle 6 angegeben.

## Patentansprüche

1. Verwendung einer Schlichtezusammensetzung umfassend
(a) Wasser,
(c) partikuläres, amorphes Siliziumdioxid und
(d) einen oder mehrere weitere Feuerfeststoffe,
zur Herstellung eines Überzugs auf einer Form bzw. einem Kern, wobei die Form wasserglasgebunden ist und/oder wobei der Kern wasserglasgebunden ist,
zur Verwendung in der Gießerei, **dadurch gekennzeichnet, dass** die Schlichtezusammensetzung weiter umfasst
(b) eine oder mehrere organische Verbindungen, ausgewählt aus der Gruppe bestehend aus Propylencarbonat, γ-Butyrolacton, Diacetin, Triacetin, dibasischem Ester, Essigsäureanhydrid, Methylcarbonat und ε-Caprolacton,
wobei dibasischer Ester eine Mischung aus mehreren Dimethylestern von Glutarsäure, Bernsteinsäure und Adipinsäure ist.

2. Verwendung nach Anspruch 1,
wobei die Primärpartikel des partikulären, amorphen Siliziumdioxids (i) sphärisch sind und (ii) einen D90-Wert < 10 µm besitzen, bestimmt mittels Laserbeugung und wobei die Primärpartikel des partikulären, amorphen Siliziumdioxids des Bestandteils (c)
eine Sphärizität von 0,9 oder mehr besitzen, bestimmt durch Auswertung zweidimensionaler mikroskopischer Bilder
und/oder
wobei dibasischer Ester eine Mischung aus mehreren Dimethylestern von Glutarsäure, Bernsteinsäure und Adipinsäure, ist und wobei die Mischung aus mehreren Dimethylestern einen Anteil in einem Bereich von 55 bis 67 Gew.-% an Dimethylglutarat, 15 bis 25 Gew.-% an Dimethylsuccinat und 10 bis 25 Gew.-% an Dimethyladipat enthält.

3. Verwendung nach einem der vorangehenden Ansprüche,
wobei
der Bestandteil (d) eine oder mehrere Substanzen umfasst, ausgewählt aus der Gruppe bestehend aus Quarz, Aluminiumoxid, Zirkondioxid, Aluminiumsilicate, Schichtsilikate, Zirkonsilikate, Olivin, Talk, Glimmer, Graphit, Koks, Feldspat, Diatomit, Kaoline, kalzinierte Kaoline, Metakaolinit, Eisenoxid und Bauxit,
und/oder
die organische Verbindung in Bestandteil (b) Propylencarbonat ist,
und/oder
die Schlichtezusammensetzung in oder als Bestandteil (c) ein partikuläres, amorphes Siliziumdioxid umfasst, welches als Nebenbestandteil in einer Menge von nicht mehr als 18 Gew.-%, bezogen auf die Gesamtmasse des besagten partikulären, amorphen Siliziumdioxids, (i) Zirkondioxid und/oder (ii) eine Lewis-Säure umfasst,
und/oder
die Schlichtezusammensetzung einen oder mehrere oder sämtliche der folgenden Bestandteile umfasst:
- ein oder mehrere Biozide,
- ein oder mehrere Netzmittel,
- ein oder mehrere rheologische Additive, und
- ein oder mehrere Bindemittel, vorzugsweise Polyvinylalkohol.

4. Verwendung nach einem der vorangehenden Ansprüche,
wobei in der Schlichtezusammensetzung das Verhältnis der Gesamtmasse sämtlicher organischer Verbindungen des Bestandteils (b) im Verhältnis zur Gesamtmasse der Schlichtezusammensetzung im Bereich von 0,1 bis 10 %, vorzugsweise im Bereich von 1 bis 5 %, vorzugsweise im Bereich von 2,5 bis 3,5 % liegt,
und/oder
wobei eine wässrige Phase vorliegt, für die gilt, dass das Verhältnis der Masse des Bestandteils (a) zur Gesamtmasse der wässrigen Phase größer ist als 50 %, bevorzugt größer als 70 %, besonders bevorzugt größer als 90 %,
und/oder
wobei die Schlichtezusammensetzung einen Feststoffgehalt kleiner 80 Gew.-% besitzt, vorzugsweise kleiner 45 Gew.-%, bezogen auf die Gesamtmasse der Schlichtezusammensetzung
und/oder
wobei die Schlichtezusammensetzung einen Anteil an partikulärem, amorphem Siliziumdioxid des Bestandteils (c) im Bereich von 1 bis 30 Gew.-%, bevorzugt 5 bis 20 Gew.-%, besonders bevorzugt 8 bis 17 Gew.-% besitzt, bezogen auf die Gesamtmasse der Schlichtezusammensetzung
und/oder
wobei die Schlichtezusammensetzung einen Gesamtanteil an partikulärem, amorphem Siliziumdioxid des Bestandteils (c) und an weiteren Feuerfeststoffen des Bestandteils (d) im Bereich von 25 Gew.-% bis 80 Gew.-%, bevorzugt 30 bis 60 Gew.-%, besonders bevorzugt 45 bis 55 Gew.-% besitzt, bezogen auf die Gesamtmasse der Schlichtezusammensetzung.

5. Verwendung nach einem der vorangehenden Ansprüche,
wobei
die Schlichtezusammensetzung ein oder mehrere Bindemittel umfasst, vorzugsweise umfassend Polyvinylalkohol, in einer Gesamtmenge von nicht mehr als 2 Gew.-%, bevorzugt in einer Menge im Bereich von 0,05 bis 0,80 Gew.-%, bezogen auf die Gesamtmasse der Schlichtezusammensetzung,
und/oder
die Herstellung des Überzugs auf der Form bzw. dem Kern durch ein Auftragungsverfahren ausgewählt aus der Gruppe bestehend aus Sprühen, Tauchen, Fluten und Streichen, vorzugsweise Tauchen, erfolgt,
und/oder
die wasserglasgebundene Form bzw. der wasserglasgebundene Kern partikuläres, amorphes Siliziumdioxid enthält,
und/oder
die Applikation der Schlichtezusammensetzung auf einer wasserglasgebundenen Form bzw. einem wasserglasgebundenen Kern zur Verwendung beim Eisen- oder Stahlguss erfolgt,
und/oder
die Applikation der Schlichtezusammensetzung auf einer wasserglasgebundenen Form bzw. einem wasserglasgebundenen Kern zur Verwendung beim Abguss einer Metallschmelze mit einer Temperatur > 900 °C, bevorzugt > 1250 °C erfolgt, vorzugsweise zur Verwendung beim Abguss einer Metallschmelze umfassend Eisen und/oder Stahl,
und/oder
die Applikation der Schlichtezusammensetzung auf einer wasserglasgebundenen Form bzw. einem wasserglasgebundenen Kern bei einer Temperatur des wasserglasgebundenen Kerns bzw. der wasserglasgebundenen Form von > 50 °C, bevorzugt > 70 °C erfolgt, besonders bevorzugt bei einer Temperatur von > 50 °C und < 100 °C.

6. Verfahren zur Herstellung einer mit einer wasserhaltigen Schlichte geschlichteten Form oder eines mit einer wasserhaltigen Schlichte geschlichteten Kerns, zur Verwendung in der Gie-ßerei, mit folgenden Schritten:
(1) Bereitstellen oder Herstellen einer Schlichtezusammensetzung umfassend
(a) Wasser,
(b) eine oder mehrere organische Verbindungen, ausgewählt aus der Gruppe bestehend aus Propylencarbonat, γ-Butyrolacton, Diacetin, Triacetin, dibasischem Ester, Essigsäureanhydrid, Methylcarbonat und ε-Caprolacton,
wobei dibasischer Ester eine Mischung aus mehreren Dimethylestern von Glutarsäure, Bernsteinsäure und Adipinsäure ist,
(c) partikuläres, amorphes Siliziumdioxid und
(d) einen oder mehrere weitere Feuerfeststoffe,
(2) Bereitstellen oder Herstellen einer ungeschlichteten Form oder eines ungeschlichteten Kerns, wobei die bereitgestellte oder hergestellte ungeschlichtete Form wasserglasgebunden ist bzw. der bereitgestellte oder hergestellte ungeschlichtete Kern wasserglasgebunden ist, und
(3) Auftragen der bereitgestellten oder hergestellten Schlichtezusammensetzung aus Schritt (1) auf die bereitgestellte oder hergestellte Form bzw. den bereitgestellten oder hergestellten Kern.

7. Verfahren nach Anspruch 6,
wobei die bereitgestellte oder hergestellte ungeschlichtete Form bzw. der bereitgestellte oder hergestellte ungeschlichtete Kern partikuläres, amorphes Siliziumdioxid enthält,
und/oder
wobei das Herstellen der ungeschlichteten Form oder des ungeschlichteten Kerns in Schritt (2) durch Aushärten einer bereitgestellten oder hergestellten Formstoffmischung
- durch die Begasung mit Kohlenstoffdioxid,
- durch die Zumischung von Estern oder Phosphaten
oder
- durch Begasung mit heißer Luft in einem beheizten Werkzeug
erfolgt,
und/oder
wobei das Auftragen auf die bereitgestellte oder hergestellte ungeschlichtete Form bzw. den bereitgestellten oder hergestellten ungeschlichteten Kern bei einer Temperatur der bereitgestellten oder hergestellten Form bzw. des bereitgestellten oder hergestellten Kerns von > 50 °C, bevorzugt > 70 °C erfolgt, besonders bevorzugt bei einer Temperatur von > 50 °C und < 100 °C,
und/oder
wobei das Auftragen auf die bereitgestellte oder hergestellte ungeschlichtete Form bzw. den bereitgestellten oder hergestellten ungeschlichteten Kern durch ein Auftragungsverfahren, ausgewählt aus der Gruppe bestehend aus Sprühen, Tauchen, Fluten und Streichen, vorzugsweise Tauchen, erfolgt.

8. Verfahren nach einem der Ansprüche 6 oder 7, wobei
in der Schlichtezusammensetzung die Primärpartikel des partikulären, amorphen Siliziumdioxids (i) sphärisch sind und (ii) einen D90-Wert < 10 µm besitzen, bestimmt mittels Laserbeugung,
und wobei die Primärpartikel des partikulären, amorphen Siliziumdioxids des Bestandteils (c) (i) eine Sphärizität von 0,9 oder mehr besitzen, bestimmt durch Auswertung zweidimensionaler mikroskopischer Bilder,
und/oder
in der Schlichtezusammensetzung der Bestandteil (d) eine oder mehrere Substanzen umfasst, ausgewählt aus der Gruppe bestehend aus Quarz, Aluminiumoxid, Zirkondioxid, Aluminiumsilicate, Schichtsilikate, Zirkonsilikate, Olivin, Talk, Glimmer, Graphit, Koks, Feldspat, Diatomit, Kaoline, kalzinierte Kaoline, Metakaolinit, Eisenoxid und Bauxit,
und/oder
in der Schlichtezusammensetzung dibasischer Ester eine Mischung aus mehreren Dimethylestern von Glutarsäure, Bernsteinsäure und Adipinsäure ist und wobei die Mischung aus mehreren Dimethylestern einen Anteil in einem Bereich von 55 bis 67 Gew.-% an Dimethylglutarat, 15 bis 25 Gew.-% an Dimethylsuccinat und 10 bis 25 Gew.-% an Dimethyladipat enthält;
und/oder
in der Schlichtezusammensetzung die organische Verbindung in Bestandteil (b) Propylencarbonat ist,
und/oder
die Schlichtezusammensetzung in oder als Bestandteil (c) ein partikuläres, amorphes Siliziumdioxid umfasst, welches als Nebenbestandteil in einer Menge von nicht mehr als 18 Gew.-%, bezogen auf die Gesamtmasse des besagten partikulären, amorphen Siliziumdioxids, (i) Zirkondioxid und/oder (ii) eine Lewis-Säure umfasst,
und/oder
die Schlichtezusammensetzung einen oder mehrere oder sämtliche der folgenden Bestandteile umfasst:
- ein oder mehrere Biozide,
- ein oder mehrere Netzmittel,
- ein oder mehrere rheologische Additive, und
- ein oder mehrere Bindemittel, vorzugsweise Polyvinylalkohol.

9. Verfahren nach einem der Ansprüche 6 bis 8, wobei
in der Schlichtezusammensetzung das Verhältnis der Gesamtmasse sämtlicher organischer Verbindungen des Bestandteils (b) im Verhältnis zur Gesamtmasse der Schlichtezusammensetzung im Bereich von 0,1 bis 10 %, vorzugsweise im Bereich von 1 bis 5 %, vorzugsweise im Bereich von 2,5 bis 3,5 % liegt,
und/oder
in der Schlichtezusammensetzung eine wässrige Phase vorliegt, für die gilt, dass das Verhältnis der Masse des Bestandteils (a) zur Gesamtmasse der wässrigen Phase größer ist als 50 %, bevorzugt größer als 70 %, besonders bevorzugt größer als 90 %,
und/oder
die Schlichtezusammensetzung einen Feststoffgehalt kleiner 80 Gew.-% besitzt, vorzugsweise kleiner 45 Gew.-%, bezogen auf die Gesamtmasse der Schlichtezusammensetzung,
und/oder
die Schlichtezusammensetzung einen Anteil an partikulärem, amorphem Siliziumdioxid des Bestandteils (c) im Bereich von 1 bis 30 Gew.-%, bevorzugt 5 bis 20 Gew.-%, besonders bevorzugt 8 bis 17 Gew.-% besitzt, bezogen auf die Gesamtmasse der Schlichtezusammensetzung,
und/oder
die Schlichtezusammensetzung einen Gesamtanteil an partikulärem, amorphem Siliziumdioxid des Bestandteils (c) und an weiteren Feuerfeststoffen des Bestandteils (d) im Bereich von 25 Gew.-% bis 80 Gew.-%, bevorzugt 30 bis 60 Gew.-%, besonders bevorzugt 45 bis 55 Gew.-% besitzt, bezogen auf die Gesamtmasse der Schlichtezusammensetzung,
und/oder
die Schlichtezusammensetzung ein oder mehrere Bindemittel umfasst, vorzugsweise umfassend Polyvinylalkohol, in einer Gesamtmenge von nicht mehr als 2 Gew.-%, bevorzugt in einer Menge im Bereich von 0,05 bis 0,80 Gew.-%, bezogen auf die Gesamtmasse der Schlichtezusammensetzung.

10. Geschlichtete Form oder geschlichteter Kern zur Verwendung in der Gießerei, jeweils umfassend eine Schlichtezusammensetzung wie definiert in einem der Ansprüche 6 oder 8 bis 9,
vorzugsweise herstellbar gemäß einem Verfahren nach einem der Ansprüche 6 bis 9,
wobei die geschlichtete Form wasserglasgebunden ist und/oder der geschlichtete Kern wasserglasgebunden ist.

11. Geschlichtete Form oder geschlichteter Kern nach Anspruch 10,
wobei die wasserglasgebundene Form und/oder der wasserglasgebundene Kern partikuläres, amorphes Siliziumdioxid enthält,
und/oder
zur Verwendung beim Abguss einer Metallschmelze mit einer Temperatur > 900 °C, bevorzugt > 1250 °C, vorzugsweise zur Verwendung beim Abguss einer Metallschmelze umfassend Eisen und/oder Stahl.

12. Kit enthaltend in separaten Komponenten
(U) eine Schlichtezusammensetzung wie definiert in einem der Ansprüche 6 oder 8 bis 9
zur Herstellung eines Überzugs auf einer wasserglasgebundenen Form bzw. einem wasserglasgebundenen Kern, zur Verwendung in der Gießerei,
(V) ein Bindemittel umfassend Wasserglas, und
(W) partikuläres, amorphes Siliziumdioxid.

## Claims

1. Use of a refractory coating composition comprising
(a) water,
(c) particulate, amorphous silicon dioxide, and
(d) one or more further refractories,
for producing a coating on a mould or a core, wherein the mould is waterglass-bound and/or wherein the core is waterglass-bound,
for use in the foundry, **characterized in that** the refractory coating composition further comprises (b) one or more organic compounds selected from the group consisting of propylene carbonate, γ-butyrolactone, diacetin, triacetin, dibasic ester, acetic anhydride, methyl carbonate and ε-caprolactone, wherein dibasic ester is a mixture of two or more dimethyl esters of glutaric acid, succinic acid and adipic acid.

2. Use according to Claim 1,
wherein the primary particles of the particulate, amorphous silicon dioxide (i) are spherical and (ii) possess a D90 < 10 µm, determined by laser diffraction and wherein the primary particles of the particulate, amorphous silicon dioxide of constituent (c) possess a sphericity of 0.9 or more, determined by evaluation of two-dimensional microscope images
and/or
wherein dibasic ester is a mixture of two or more dimethyl esters of glutaric acid, succinic acid and adipic acid, and wherein the mixture of two or more dimethyl esters comprises a fraction in a range from 55 to 67 wt% of dimethyl glutarate, 15 to 25 wt% of dimethyl succinate and 10 to 25 wt% of dimethyl adipate.

3. Use according to either of the preceding claims, wherein
constituent (d) comprises one or more substances selected from the group consisting of quartz, aluminium oxide, zirconium dioxide, aluminium silicates, phyllosilicates, zirconium silicates, olivine, talc, mica, graphite, coke, feldspar, diatomite, kaolins, calcined kaolins, metakaolinite, iron oxide and bauxite,
and/or
the organic compound in constituent (b) is propylene carbonate,
and/or
the refractory coating composition comprises in or as constituent (c) a particulate, amorphous silicon dioxide which as a secondary constituent comprises, in an amount of not more than 18 wt%, based on the total mass of said particulate, amorphous silicon dioxide, (i) zirconium dioxide and/or (ii) a Lewis acid,
and/or
the refractory coating composition comprises one or more or all of the following constituents:
- one or more biocides,
- one or more wetting agents,
- one or more rheological additives, and
- one or more binders, preferably polyvinyl alcohol.

4. Use according to any of the preceding claims, wherein in the refractory coating composition the ratio of the total mass of all organic compounds of constituent (b) in relation to the total mass of the refractory coating composition is in the range from 0.1 to 10%, preferably in the range from 1 to 5%, preferably in the range from 2.5 to 3.5%,
and/or
wherein an aqueous phase is present for which the ratio of the mass of constituent (a) to the total mass of the aqueous phase is greater than 50%, preferably greater than 70%, more preferably greater than 90%,
and/or
wherein the refractory coating composition possesses a solids content of less than 80 wt%, preferably less than 45 wt%, based on the total mass of the refractory coating composition
and/or
wherein the refractory coating composition possesses a fraction of particulate, amorphous silicon dioxide of constituent (c) in the range from 1 to 30 wt%, preferably 5 to 20 wt%, more preferably 8 to 17 wt%, based on the total mass of the refractory coating composition
and/or
wherein the refractory coating composition possesses a total fraction of particulate amorphous silicon dioxide of constituent (c) and of further refractories of constituent (d) in the range from 25 wt% to 80 wt%, preferably 30 to 60 wt%, more preferably 45 to 55 wt%, based on the total mass of the refractory coating composition.

5. Use according to any of the preceding claims, wherein
the refractory coating composition comprises one or more binders, preferably comprising polyvinyl alcohol, in a total amount of not more than 2 wt%, preferably in an amount in the range from 0.05 to 0.80 wt%, based on the total mass of the refractory coating composition, and/or
the coating is produced on the mould or the core by an application process selected from the group consisting of spraying, dipping, flow coating, and spreading, preferably dipping,
and/or
the waterglass-bound mould or the waterglass-bound core comprises particulate, amorphous silicon dioxide,
and/or
the refractory coating composition is applied to a waterglass-bound mould or a waterglass-bound core for use in the casting of iron or steel,
and/or
the refractory coating composition is applied to a waterglass-bound mould or a waterglass-bound core for use in the casting of a metal melt with a temperature > 900°C, preferably > 1250°C, preferably for use in the casting of a metal melt comprising iron and/or steel,
and/or
the refractory coating composition is applied to a waterglass-bound mould or a waterglass-bound core at a temperature of the waterglass-bound core or the waterglass-bound mould of > 50°C, preferably > 70°C, more preferably at a temperature of > 50°C and < 100°C.

6. Process for producing a mould coated with a water-containing refractory coating or a core coated with a water-containing refractory coating, for use in the foundry, comprising the following steps:
(1) providing or producing a refractory coating composition comprising
(a) water,
(b) one or more organic compounds selected from the group consisting of propylene carbonate, γ-butyrolactone, diacetin, triacetin, dibasic ester, acetic anhydride, methyl carbonate and ε-caprolactone, wherein dibasic ester is a mixture of two or more dimethyl esters of glutaric acid, succinic acid and adipic acid,
(c) particulate, amorphous silicon dioxide, and
(d) one or more further refractories,
(2) providing or producing an uncoated mould or an uncoated core, wherein the provided or produced uncoated mould is waterglass-bound or the provided or produced uncoated core is waterglass-bound, and
(3) applying the provided or produced refractory coating composition from step (1) to the provided or produced mould or the provided or produced core.

7. Process according to Claim 6,
wherein the provided or produced uncoated mould or the provided or produced uncoated core comprises particulate, amorphous silicon dioxide,
and/or
wherein the uncoated mould or the uncoated core is produced in step (2) by curing a provided or produced moulding material mixture
- by gassing with carbon dioxide,
- by admixing esters or phosphates
or
- by gassing with hot air in a heated tool,
and/or
wherein the applying to the provided or produced uncoated mould or the provided or produced uncoated core takes place at a temperature of the provided or produced mould or provided or produced core of > 50°C, preferably > 70°C, more preferably at a temperature of > 50°C and < 100°C,
and/or
wherein the applying to the provided or produced uncoated mould or the provided or produced uncoated core takes place by an application process selected from the group consisting of spraying, dipping, flow coating, and spreading, preferably dipping.

8. Process according to either of Claims 6 and 7, wherein
in the refractory coating composition, the primary particles of the particulate, amorphous silicon dioxide (i) are spherical and (ii) possess a D90 < 10 µm, determined by laser diffraction,
and wherein the primary particles of the particulate, amorphous silicon dioxide of constituent (c) (i) possess a sphericity of 0.9 or more, determined by evaluation of two-dimensional microscope images,
and/or
in the refractory coating composition, constituent (d) comprises one or more substances selected from the group consisting of quartz, aluminium oxide, zirconium dioxide, aluminium silicates, phyllosilicates, zirconium silicates, olivine, talc, mica, graphite, coke, feldspar, diatomite, kaolins, calcined kaolins, metakaolinite, iron oxide and bauxite,
and/or
in the refractory coating composition, dibasic ester is a mixture of two or more dimethyl esters of glutaric acid, succinic acid and adipic acid and wherein the mixture of two or more dimethyl esters comprises a fraction in a range from 55 to 67 wt% of dimethyl glutarate, 15 to 25 wt% of dimethyl succinate and 10 to 25 wt% of dimethyl adipate;
and/or
in the refractory coating composition, the organic compound in constituent (b) is propylene carbonate, and/or
the refractory coating composition comprises in or as constituent (c) a particulate, amorphous silicon dioxide which as a secondary constituent comprises, in an amount of not more than 18 wt%, based on the total mass of said particulate, amorphous silicon dioxide, (i) zirconium dioxide and/or (ii) a Lewis acid,
and/or
the refractory coating composition comprises one or more or all of the following constituents:
- one or more biocides,
- one or more wetting agents,
- one or more rheological additives, and
- one or more binders, preferably polyvinyl alcohol.

9. Process according to any of Claims 6 to 8, wherein in the refractory coating composition the ratio of the total mass of all organic compounds of constituent (b) in relation to the total mass of the refractory coating composition is in the range from 0.1 to 10%, preferably in the range from 1 to 5%, preferably in the range from 2.5 to 3.5%,
and/or
in the refractory coating composition, an aqueous phase is present for which the ratio of the mass of constituent (a) to the total mass of the aqueous phase is greater than 50%, preferably greater than 70%, more preferably greater than 90%,
and/or
the refractory coating composition possesses a solids content of less than 80 wt%, preferably less than 45 wt%, based on the total mass of the refractory coating composition,
and/or
the refractory coating composition possesses a fraction of particulate, amorphous silicon dioxide of constituent (c) in the range from 1 to 30 wt%, preferably 5 to 20 wt%, more preferably 8 to 17 wt%, based on the total mass of the refractory coating composition,
and/or
the refractory coating composition possesses a total fraction of particulate amorphous silicon dioxide of constituent (c) and of further refractories of constituent (d) in the range from 25 wt% to 80 wt%, preferably 30 to 60 wt%, more preferably 45 to 55 wt%, based on the total mass of the refractory coating composition,
and/or
the refractory coating composition comprises one or more binders, preferably comprising polyvinyl alcohol, in a total amount of not more than 2 wt%, preferably in an amount in the range from 0.05 to 0.80 wt%, based on the total mass of the refractory coating composition.

10. Coated mould or coated core for use in the foundry, in each case comprising a refractory coating composition as defined in any of Claims 6 or 8 to 9,
preferably producible by a process according to any of Claims 6 to 9,
wherein the coated mould is waterglass-bound and/or wherein the coated core is waterglass-bound.

11. Coated mould or coated core according to Claim 10, wherein the waterglass-bound mould and/or the waterglass-bound core comprises particulate, amorphous silicon dioxide,
and/or
for use in the casting of a metal melt with a temperature > 900°C, preferably > 1250°C, preferably for use in the casting of a metal melt comprising iron and/or steel.

12. Kit including in separate components (U) a refractory coating composition as defined in any of Claims 6 or 8 to 9 for producing a coating on a waterglass-bound mould or a waterglass-bound core, for use in the foundry,
(V) a binder comprising waterglass, and
(W) particulate, amorphous silicon dioxide.

## Revendications

1. Utilisation d'une composition de poteyage comprenant
(a) de l'eau,
(c) du dioxyde de silicium amorphe particulaire et
(d) une ou plusieurs autres matières réfractaires,
pour réaliser un revêtement sur un moule ou un noyau, dans laquelle le moule est à prise par verre soluble et/ou dans laquelle le noyau est à prise par verre soluble,
pour l'utilisation en fonderie, **caractérisée en ce que** la composition de poteyage comprend par ailleurs
(b) un ou plusieurs composés organiques choisis dans le groupe comprenant du carbonate de propylène, de la γ-butyrolactone, de la diacétine, de la triacétine, de l'ester dibasique, de l'anhydride acétique, du carbonate de méthyle et de la ε-caprolactone,
dans laquelle l'ester dibasique est un mélange de plusieurs esters diméthyliques d'acide glutarique, d'acide succinique et d'acide adipique.

2. Utilisation selon la revendication 1,
dans laquelle les particules primaires du dioxyde de silicium amorphe particulaire (i) sont sphériques et (ii) ont une valeur D90 < 10 µm, déterminée par diffraction laser et dans laquelle les particules primaires du dioxyde de silicium amorphe particulaire du composant
(c) ont une sphéricité de 0,9 ou plus, déterminée par l'évaluation d'images microscopiques bidimensionnelles
et/ou
dans laquelle l'ester dibasique est un mélange de plusieurs esters diméthyliques d'acide glutarique, d'acide succinique et d'acide adipique, et dans laquelle le mélange de plusieurs esters diméthyliques contient une proportion dans une plage de 55 à 67 % en poids de glutarate de diméthyle, de 15 à 25 % en poids de succinate de diméthyle et de 10 à 25 % en poids d'adipate de diméthyle.

3. Utilisation selon l'une quelconque des revendications précédentes,
dans laquelle
le composant (d) comprend une ou plusieurs substances choisies dans le groupe comprenant du quartz, de l'oxyde d'aluminium, du dioxyde de zirconium, des silicates d'aluminium, des silicates stratifiés, des silicates de zirconium, de l'olivine, du talc, du mica, du graphite, du coke, du feldspath, de la diatomite, du kaolin, du kaolin calciné, de la métakaolinite, de l'oxyde de fer et de la bauxite,
et/ou
le composé organique dans le composant (b) est du carbonate de propylène,
et/ou
la composition de poteyage dans ou en tant que composant (c) comprend un dioxyde de silicium amorphe particulaire qui, en tant que sous-composant, comprend, en une quantité ne dépassant pas 18 % en poids, par rapport à la masse totale dudit dioxyde de silicium amorphe particulaire, (i) du dioxyde de zirconium et/ou (ii) un acide de Lewis,
et/ou
la composition de poteyage comprend un ou plusieurs ou la totalité des composants suivants :
- un ou plusieurs biocides,
- un ou plusieurs agents mouillants,
- un ou plusieurs additifs rhéologiques, et
- un ou plusieurs liants, de préférence de l'alcool polyvinylique.

4. Utilisation selon l'une quelconque des revendications précédentes, dans laquelle, dans la composition de poteyage, le rapport de la masse totale de la totalité des composés organiques du composant (b) par rapport à la masse totale de la composition de poteyage se situe dans la plage de 0,1 à 10 %, de préférence dans la plage de 1 à 5 %, de préférence dans la plage de 2,5 à 3,5 %,
et/ou
dans laquelle est présente une phase aqueuse pour laquelle s'applique le fait que le rapport de la masse du composant (a) par rapport à la masse totale de la phase aqueuse est supérieur à 50 %, de manière préférée est supérieur à 70 %, de manière particulièrement préférée est supérieur à 90 %,
et/ou
dans laquelle la composition de poteyage a une teneur en matières solides inférieure à 80 % en poids, de préférence inférieure à 45 % en poids, par rapport à la masse totale de la composition de poteyage
et/ou
dans laquelle la composition de poteyage présente une proportion de dioxyde de silicium amorphe particulaire du composant (c) dans la plage de 1 à 30 % en poids, de manière préférée de 5 à 20 % en poids, de manière particulièrement préférée de 8 à 17 % en poids, par rapport à la masse totale de la composition de poteyage
et/ou
dans laquelle la composition de poteyage présente une proportion totale de dioxyde de silicium amorphe particulaire du composant (c) et d'autres matières réfractaires du composant (d) dans la plage de 25 % en poids à 80 % en poids, de manière préférée de 30 à 60 % en poids, de manière particulièrement préférée de 45 à 55 % en poids, par rapport à la masse totale de la composition de poteyage.

5. Utilisation selon l'une quelconque des revendications précédentes,
dans laquelle
la composition de poteyage comprend un ou plusieurs liants, comprenant de préférence de l'alcool polyvinylique, en une quantité totale ne dépassant pas 2 % en poids, de manière préférée en une quantité dans la plage de 0,05 à 0,80 % en poids, par rapport à la masse totale de la composition de poteyage,
et/ou
la fabrication du revêtement sur le moule ou le noyau est effectuée par un procédé d'application choisi dans le groupe comprenant la pulvérisation, le trempage, l'arrosage et l'application au pinceau, de préférence le trempage,
et/ou
le moule à prise par verre soluble ou le noyau à prise par verre soluble contient du dioxyde de silicium amorphe particulaire,
et/ou
l'application de la composition de poteyage est effectuée sur un moule ou un noyau à prise par verre soluble destiné à être utilisé dans la fonte de fer ou d'acier,
et/ou
l'application de la composition de poteyage est effectuée sur un moule à prise par verre soluble ou un noyau à prise par verre soluble destiné à être utilisé lors de la coulée d'un métal fondu à une température > 900 °C, de manière préférée > 1250 °C, de préférence destiné à être utilisé lors de la coulée d'un métal fondu comprenant du fer et/ou de l'acier,
et/ou
l'application de la composition de poteyage est effectuée sur un moule à prise par verre soluble ou un noyau à prise par verre soluble à une température du noyau à prise par verre soluble ou du moule à prise par verre soluble > 50 °C, de manière préférée > 70 °C, de manière particulièrement préférée à une température > 50 °C et < 100 °C.

6. Procédé de fabrication d'un moule poteyé avec un poteyage aqueux ou d'un noyau poteyé avec un poteyage aqueux, destiné à être utilisé en fonderie, avec des étapes suivantes :
(1) de fourniture ou de fabrication d'une composition de poteyage comprenant
(a) de l'eau,
(b) un ou plusieurs composés organiques choisis dans le groupe comprenant du carbonate de propylène, de la γ-butyrolactone, de la diacétine, de la triacétine, de l'ester dibasique, de l'anhydride acétique, du carbonate de méthyle et de la ε-caprolactone,
dans lequel l'ester dibasique est un mélange de plusieurs esters diméthyliques d'acide glutarique, d'acide succinique et d'acide adipique,
(c) du dioxyde de silicium amorphe particulaire et
(d) une ou plusieurs autres matières réfractaires,
(2) de fourniture ou de fabrication d'un moule non poteyé ou d'un noyau non poteyé, dans lequel le moule non poteyé fourni ou fabriqué ou le noyau non poteyé fourni ou fabriqué est à prise par verre soluble, et/ou le noyau non poteyé fourni ou fabriqué est à prise par verre soluble, et
(3) d'application de la composition de poteyage fournie ou fabriquée issue de l'étape (1) sur le moule fourni ou fabriqué ou sur le noyau fourni ou fabriqué.

7. Procédé selon la revendication 6,
dans lequel le moule non poteyé fourni ou fabriqué ou le noyau non poteyé fourni ou fabriqué contient du dioxyde de silicium amorphe particulaire,
et/ou
dans lequel la fabrication du moule non poteyé ou du noyau non poteyé à l'étape (2) par durcissement d'un mélange de matériau de moulage fourni ou fabriqué est effectuée
- par gazéification au dioxyde de carbone,
- par l'ajout d'esters ou de phosphates
ou
- par gazéification à l'air chaud dans un outil chauffé et/ou
dans lequel l'application sur le moule non poteyé fourni ou fabriqué ou le noyau non poteyé fourni ou fabriqué est effectuée à une température du moule fourni ou fabriqué ou du noyau fourni ou fabriqué > 50 °C, de manière préférée > 70 °C, de manière particulièrement préférée à une température > 50 °C et < 100 °C,
et/ou
dans lequel l'application sur le moule non poteyé fourni ou fabriqué ou le noyau non poteyé fourni ou fabriqué est effectuée par un procédé d'application choisi dans le groupe comprenant la pulvérisation, le trempage, l'arrosage et l'application au pinceau, de préférence le trempage.

8. Procédé selon l'une quelconque des revendications 6 ou 7, dans lequel
dans la composition de poteyage, les particules primaires du dioxyde de silicium amorphe particulaire (i) sont sphériques et (ii) ont une valeur D90 < 10 µm, déterminée par diffraction laser,
et dans lequel les particules primaires du dioxyde de silicium amorphe particulaire du composant (c)
(i) ont une sphéricité de 0,9 ou plus, déterminée par l'évaluation d'images microscopiques bidimensionnelles,
et/ou
dans la composition de poteyage, le composant (d) comprend une ou plusieurs substances choisies dans le groupe comprenant du quartz, de l'oxyde d'aluminium, du dioxyde de zirconium, des silicates d'aluminium, des silicates stratifiés, des silicates de zirconium, de l'olivine, du talc, du mica, du graphite, du coke, du feldspath, de la diatomite, du kaolin, du kaolin calciné, de la métakaolinite, de l'oxyde de fer et de la bauxite,
et/ou
dans la composition de poteyage, l'ester dibasique est un mélange de plusieurs esters diméthyliques d'acide glutarique, d'acide succinique et d'acide adipique et dans lequel le mélange de plusieurs esters diméthyliques contient une proportion dans une plage de 55 à 67 % en poids de glutarate de diméthyle, de 15 à 25 % en poids de succinate de diméthyle et de 10 à 25 % en poids d'adipate de diméthyle ;
et/ou
dans la composition de poteyage, le composé organique dans le composant (b) est du carbonate de propylène,
et/ou
la composition de poteyage dans ou en tant que composant (c) comprend un dioxyde de silicium amorphe particulaire qui, en tant que sous-composant, comprend, en une quantité ne dépassant pas 18 % en poids, par rapport à la masse totale dudit dioxyde de silicium amorphe particulaire, (i) du dioxyde de zirconium et/ou (ii) un acide de Lewis,
et/ou la composition de poteyage comprend un ou plusieurs ou la totalité des composants suivants :
- un ou plusieurs biocides,
- un ou plusieurs agents mouillants,
- un ou plusieurs additifs rhéologiques, et
- un ou plusieurs liants, de préférence de l'alcool polyvinylique.

9. Procédé selon l'une quelconque des revendications 6 à 8, dans lequel
dans la composition de poteyage, le rapport de la masse totale de la totalité des composés organiques du composant (b) par rapport à la masse totale de la composition de poteyage se situe dans la plage de 0,1 à 10 %, de préférence dans la plage de 1 à 5 %, de préférence dans la plage de 2,5 à 3,5 %,
et/ou
dans la composition de poteyage, une phase aqueuse est présente, pour laquelle s'applique le fait que le rapport de la masse du composant (a) par rapport à la masse totale de la phase aqueuse est supérieur à 50 %, de manière préférée est supérieur à 70 %, de manière particulièrement préférée est supérieur à 90 %,
et/ou
la composition de poteyage présente une teneur en matières solides inférieure à 80 % en poids, de préférence inférieure à 45 % en poids, par rapport à la masse totale de la composition de poteyage,
et/ou
la composition de poteyage présente une proportion de dioxyde de silicium amorphe particulaire du composant (c) dans la plage de 1 à 30 % en poids, de manière préférée de 5 à 20 % en poids, de manière particulièrement préférée de 8 à 17 % en poids, par rapport à la masse totale de la composition de poteyage,
et/ou
la composition de poteyage présente une proportion totale de dioxyde de silicium amorphe particulaire du composant (c) et d'autres matières réfractaires du composant (d) dans la plage de 25 % en poids à 80 % en poids, de préférence de 30 à 60 % en poids, de manière particulièrement préférée de 45 à 55 % en poids, par rapport à la masse totale de la composition de poteyage,
et/ou
la composition de poteyage comprend un ou plusieurs liants, comprenant de préférence de l'alcool polyvinylique, en une quantité totale ne dépassant pas 2 % en poids, de préférence en une quantité dans la plage de 0,05 à 0,80 % en poids, par rapport à la masse totale de la composition de poteyage.

10. Moule poteyé ou noyau poteyé pour une utilisation en fonderie, comprenant chacun une composition de poteyage telle que définie dans l'une quelconque des revendications 6 ou 8 à 9,
pouvant être fabriqué de préférence selon un procédé selon l'une quelconque des revendications 6 à 9,
dans lequel le moule poteyé est à prise par verre soluble et/ou le noyau poteyé est à prise par verre soluble.

11. Moule poteyé ou noyau poteyé selon la revendication 10,
dans lequel le moule à prise par verre soluble et/ou le noyau à prise par verre soluble contient du dioxyde de silicium amorphe particulaire,
et/ou
destiné à être utilisé lors de la coulée d'un métal fondu à une température > 900 °C, de manière préférée > 1250 °C, de préférence destiné à être utilisé lors de la coulée d'un métal fondu comprenant du fer et/ou de l'acier.

12. Ensemble comprenant, dans des composants séparés,
(U) une composition de poteyage telle que définie dans l'une quelconque des revendications 6 ou 8 à 9
pour la fabrication d'un revêtement sur un moule à prise par verre soluble ou un noyau à prise par verre soluble, pour l'utilisation en fonderie,
(V) un liant comprenant du verre soluble, et
(W) du dioxyde de silicium amorphe particulaire.
